# EUROPEAN PATENT APPLICATION

(11) **EP 3 937 407 A1**
(43) Date of publication of application: **12.01.2022**
(21) Application number: 20770945.2
(22) Date of filing: 06.03.2020
(51) Int. Cl.: H04L 5/00, H04L 1/18, H04L 1/00, H04W 28/02, H04W 72/04

(54) **APPARATUS AND METHOD FOR TRANSMITTING FEEDBACK INFORMATION IN WIRELESS COMMUNICATION SYSTEM**

(30) Priority: 08.03.2019 KR 20190027158; 05.07.2019 KR 20190081592
(71) Applicant: Samsung Electronics Co., Ltd., Suwon-si, Gyeonggi-do 16677 (KR)
(72) Inventor: YEO, Jeongho, Suwon-si Gyeonggi-do 16677 (KR); RYU, Hyunseok, Suwon-si Gyeonggi-do 16677 (KR); PARK, Sungjin, Suwon-si Gyeonggi-do 16677 (KR); OH, Jinyoung, Suwon-si Gyeonggi-do 16677 (KR); BANG, Jonghyun, Suwon-si Gyeonggi-do 16677 (KR); SHIN, Cheolkyu, Suwon-si Gyeonggi-do 16677 (KR)
(74) Representative: Gulde & Partner
(86) International application number: PCT/KR2020/003193
(87) International publication number: WO 2020/184914

(57) **Abstract**

The present disclosure relates to a 5th (5G) generation or pre-5G communication system for supporting a higher data transmission rate beyond a 4th (4G) generation communication system such as long term evolution (LTE). According to various embodiments of the present disclosure, an operating method of a terminal in a wireless communication system includes receiving sidelink feedback control information (SFCI) from other terminal, identifying a resource region for transmitting the SFCI to a base station, and transmitting control information comprising the SFCI and uplink control information (UCI) to the base station in the resource region.

## Description

### Technical Field

The present disclosure generally relates to a wireless communication system, and more specifically, to an apparatus and a method for transmitting feedback information in the communication system.

### Background Art

To satisfy a wireless data traffic demand which is growing after a 4th generation (4G) communication system is commercialized, efforts are exerted to develop an advanced 5th generation (5G) communication system or a pre-5G communication system. For this reason, the 5G communication system or the pre-5G communication system is referred to as a beyond 4G network communication system or a post long term evolution (LTE) system.

To achieve a high data rate, the 5G communication system considers its realization in an extremely high frequency (mmWave) band (e.g., 60 GHz band). To mitigate a path loss of propagation and to extend a propagation distance in the extremely high frequency band, the 5G communication system is discussing beamforming, massive multiple input multiple output (MIMO), full dimensional (FD)-MIMO, array antenna, analog beam-forming, and large scale antenna techniques.

Also, for network enhancement of the system, the 5G communication system is developing techniques such as evolved small cell, advanced small cell, cloud radio access network (RAN), ultra-dense network, device to device (D2D) communication, wireless backhaul, moving network, cooperative communication, coordinated multi-points (CoMP), and receive interference cancellation.

Besides, the 5G system is developing hybrid frequency shift keying and quadrature amplitude modulation (FQAM) and sliding window superposition coding (SWSC) as advanced coding modulation (ACM) schemes, and filter bank multi carrier (FBMC), non orthogonal multiple access (NOMA), and sparse code multiple access (SCMA) as advanced access technologies.

A sidelink indicates a communication scheme in which a terminal communicates directly with other terminal without going through a base station. The terminal may transmit data and control information to other terminal through the sidelink, and receive data and control information from other terminal. In addition, the terminal which performs the sidelink communication may be located within coverage of the base station, wherein the terminal may also perform communication with the base station.

### Disclosure of Invention

### Technical Problem

In a wireless communication system (e.g., a new radio (NR) system), a receiving device may receive from a transmitting device data according to data transmission to the receiving device, and then transmit hybrid automatic repeat request-acknowledgment (HARQ-ACK) feedback information for the data to the transmitting device. For example, in downlink data transmission, a terminal transmits to a base station HARQ-ACK feedback information for data transmitted from the base station in a configured resource. Even in sidelink data transmission, a receiving terminal may transmit HARQ-ACK feedback to a transmitting terminal. At this time, if the sidelink transmission is performed according to scheduling of the base station, the terminal transmitting the data may transmit whether the sidelink data transmission is successful, or information such as an amount of data to be transmitted by the terminal through the sidelink. For example, whether the sidelink data transmission is successful or the information such as the data amount to be transmitted by the terminal through the sidelink may be necessary information for the base station to schedule the sidelink transmission. If the terminal performing the sidelink data transmission transmits the sidelink feedback to the base station, it is necessary to transmit not only the sidelink feedback information but also other control information in an uplink. For example, HARQ-ACK for downlink data and control information such as channel state information (CSI) feedback for channel information carry may be transmitted together with the sidelink feedback information in the uplink.

Based on the discussions described above, the present disclosure provides an apparatus and a method for transmitting feedback information in a wireless communication system.

In addition, the present disclosure provides an apparatus and a method for a terminal to transmit feedback for sidelink data transmission to a base station in a wireless communication system.

In addition, the present disclosure provides an apparatus and a method for transmitting HARQ-ACK information for sidelink data in a wireless communication system.

In addition, the present disclosure provides an apparatus and a method for transmitting uplink control information related to feedback for sidelink data in a wireless communication system.

In addition, the present disclosure provides an apparatus and a method for a receiving terminal to transmit HARQ-ACK feedback to a transmitting terminal in data communication for sidelink group cast in a wireless communication system.

### Solution to Problem

According to various embodiments of the present disclosure, an operating method of a terminal in a wireless communication system includes receiving sidelink feedback control information (SFCI) from other terminal, identifying a resource region for transmitting the SFCI to a base station, and transmitting control information comprising the SFCI and uplink control information (UCI) to the base station in the resource region.

According to various embodiments of the present disclosure, an operating method of a terminal in a wireless communication system includes receiving sidelink control information (SCI) comprising location information for at least one terminal, from other terminal, obtaining measurement information related to a signal strength received from the other terminal, and determining whether to transmit feedback information for sidelink groupcast data received from the other terminal, based on the location information and the measurement information.

According to various embodiments of the present disclosure, a terminal in a wireless communication system includes a transceiver for receiving SFCI, from other terminal, and at least one processor for identifying a resource region for transmitting the SFCI to a base station. The transceiver transmits control information comprising the SFCI and UCI to the base station in the resource region.

According to various embodiments of the present disclosure, a terminal in a wireless communication system includes a transceiver for receiving SCI comprising location information of at least one terminal, from other terminal, and at least one processor for obtaining measurement information related to a signal strength received from the other terminal, and determining whether to transmit feedback information for sidelink groupcast data received from the other terminal, based on the location information and the measurement information.

### Advantageous Effects of Invention

An apparatus and a method according to various embodiments of the present disclosure may transmit uplink control information (UCI) and sidelink feedback control information (SFCI) to a base station in the same resource region, and thus reduce resources used to transmit and/or receive feedback information.

An apparatus and a method according to various embodiments of the present disclosure may define a processing time for transmitting SFCI to a base station after receiving the SFCI in a sidelink, and thus acquire a sufficient processing time for a terminal to process the SFCI before transmitting the SFCI to the base station.

An apparatus and a method according to various embodiments of the present disclosure may prevent unnecessary resource assignment, by selectively transmitting feedback information of sidelink groupcast data to other terminal according to whether the sidelink groupcast data is valid information for the terminal.

Effects obtainable from the present disclosure are not limited to the above-mentioned effects, and other effects which are not mentioned may be clearly understood by those skilled in the art of the present disclosure through the following descriptions.

### Brief Description of Drawings

FIG. 1 illustrates a wireless communication system according to various embodiments of the present disclosure.
FIG. 2 illustrates a configuration of a base station in a wireless communication system according to various embodiments of the present disclosure.
FIG. 3 illustrates a configuration of a terminal in a wireless communication system according to various embodiments of the present disclosure.
FIG. 4 illustrates a configuration of a communication unit in a wireless communication system according to various embodiments of the present disclosure.
FIG. 5 illustrates a structure of a time-frequency domain in which data or control information is transmitted in a downlink or un uplink in a wireless communication system according to various embodiments of the present disclosure.
FIG. 6 illustrates an example in which data for enhanced mobile broadband (eMBB), ultra-reliable and low-latency communications (URLLC), and massive machine type communications (mMTC) are allocated to time-frequency resources in a wireless communication system according to various embodiments of the present disclosure.
FIG. 7 illustrates another example in which data for eMBB, URLLC, and mMTC are allocated to time-frequency resources in a wireless communication system according to various embodiments of the present disclosure.
FIG. 8 illustrates an example of performing unicast communication between terminals via a sidelink in a wireless communication system according to various embodiments of the present disclosure.
FIG. 9 illustrates an example of performing group cast communication via a sidelink in a wireless communication system according to various embodiments of the present disclosure.
FIG. 10 illustrates an example of transmitting feedback information indicating reception success or reception failure of groupcast data in a wireless communication system according to various embodiments of the present disclosure.
FIG. 11 illustrates a structure of resources to which a synchronization signal (SS) and a physical broadcast channel are mapped in a wireless communication system according to various embodiments of the present disclosure.
FIG. 12 illustrates symbols to which SS/PBCH blocks are mapped in a slot in a wireless communication system according to various embodiments of the present disclosure.
FIG. 13 illustrates an example of symbols for transmitting an SS/PBCH block according to a subcarrier spacing in a wireless communication system according to various embodiments of the present disclosure.
FIG. 14 illustrates another example of symbols for transmitting an SS/PBCH block according to a subcarrier spacing in a wireless communication system according to various embodiments of the present disclosure.
FIG. 15 illustrates an example where a base station schedules sidelink data transmission in a wireless communication system according to various embodiments of the present disclosure.
FIG. 16 illustrates an example of transmitting feedback information for a sidelink in a wireless communication system according to various embodiments of the present disclosure.
FIG. 17 illustrates an example of transmitting feedback information for sidelink data in a wireless communication system according to various embodiments of the present disclosure.
FIG. 18 illustrates an example of segmentation of code blocks and cyclic redundancy check (CRC) addition to the code blocks in a wireless communication system according to various embodiments of the present disclosure.
FIG. 19 illustrates an example of a configuration of feedback bits to be transmitted to a base station via an uplink in a wireless communication system according to various embodiments of the present disclosure.
FIG. 20 illustrates an example of sidelink groupcast in a wireless communication system according to various embodiments of the present disclosure.
FIG. 21 illustrates a flowchart of a terminal for sidelink communication in a wireless communication system according to various embodiments of the present disclosure.
FIG. 22 illustrates a flowchart of a terminal for sidelink groupcast in a wireless communication system according to various embodiments of the present disclosure.

### Best Mode for Carrying out the Invention

Terms used in the present disclosure are used for describing particular embodiments, and are not intended to limit the scope of other embodiments. A singular form may include a plurality of forms unless it is explicitly differently represented. All the terms used herein, including technical and scientific terms, may have the same meanings as terms generally understood by those skilled in the art to which the present disclosure pertains. The terms defined in a general dictionary among terms used in the present disclosure may be interpreted to have the same or similar meanings with the context of the relevant art, and, unless explicitly defined in this disclosure, it shall not be interpreted ideally or excessively as formal meanings. In some cases, even terms defined in this disclosure should not be interpreted to exclude the embodiments of the present disclosure.

In various embodiments of the present disclosure to be described below, a hardware approach is described as an example. However, since the various embodiments of the present disclosure include a technology using both hardware and software, the various embodiments of the present disclosure do not exclude a software-based approach.

Hereafter, the present disclosure relates to an apparatus and a method for transmitting and receiving feedback information in a wireless communication system. Specifically, the present disclosure explains a technique for transmitting hybrid automatic repeat request-acknowledgment (HARQ-ACK) feedback information for sidelink data transmission and information related to the HARQ-ACK feedback information in the wireless communication system.

Terms indicating signals, terms indicating channels, terms indicating control information, terms indicating network entities, and terms indicating components of an apparatus, which are used in the following descriptions, are for the sake of explanations. Accordingly, the present disclosure is not limited to the terms to be described, and may use other terms having technically identical meaning.

In addition, the present disclosure describes various embodiments using terms used in some communication standard (e.g., 3^{rd} generation partnership project (3GPP)), which are merely exemplary for explanations. Various embodiments of the present disclosure may be easily modified and applied in other communication system.

It is assumed that the wireless communication system of the present disclosure may include a new radio (NR) system, and various embodiments of the present disclosure may be applied to the NR system. However, this is only an example for descriptions, and various embodiments of the present disclosure may be easily modified and applied to other communication system.

Hereinafter, various embodiments of the present disclosure are described in detail with reference to the accompanying drawings.

In describing the embodiments, technical contents well known in the technical field to which the present invention pertains and which are not directly related to the present invention are omitted in the descriptions. This is to more clearly provide the subject matter of the present invention by omitting unnecessary descriptions without obscuring the subject matter of the present disclosure.

For the same reason, some components in the accompanying drawings are exaggerated, omitted, or schematically illustrated. Also, a size of each component does not entirely reflect its actual size. The same reference number is given to the same or corresponding element in each drawing.

Advantages and features of the present invention, and a method for achieving them will be clarified with reference to embodiments described below in detail together with the accompanying drawings. However, the present invention is not limited to the embodiments disclosed below, but may be implemented in various different forms, the embodiments are provided to only complete the disclosure of the present invention and to allow those skilled in the art to which the present invention pertains to fully understand a category of the invention, and the present invention is defined merely by the category of claims. The same reference numeral refers to the same element throughout the specifications.

At this time, it will be understood that each block of flowchart illustrations and combinations of the flowchart illustrations may be executed by computer program instructions. These computer program instructions may be mounted on a processor of a general-purpose computer, special-purpose computer, or other programmable data processing equipment, and accordingly instructions performed through the processor of the computer or other programmable data processing equipment create means for performing functions described in flowchart block(s). Since these computer program instructions may be stored in a computer usable or a computer readable memory which may aim for the computer or the other programmable data processing equipment to implement the function in a particular manner, the instructions stored in the computer usable or computer readable memory may produce a manufacture article including instruction means which conducts the function described in the flowchart block(s). Since the computer program instructions may also be loaded on the computer or the other programmable data processing equipment, a series of operational steps may be performed on the computer or the other programmable data processing equipment to generate a computer-executed process and the instructions performing the computer or the other programmable data processing equipment may provide steps for executing the functions described in the flowchart block(s).

Also, each block may represent a module, a segment or a portion of code including one or more executable instructions for executing specified logical function(s). It should also be noted that the functions mentioned in the blocks may occur out of sequence in some alternative implementations. For example, two blocks shown in succession may in fact be executed substantially simultaneously or the blocks may be sometimes executed in reverse order according to a corresponding function.

At this time, the term '∼ unit' used in the present embodiment indicates software or a hardware component such as a field programmable gate array (FPGA) or an application-specific integrated circuit (ASIC), and '∼ unit' performs specific tasks. However, '∼ unit' is not limited to the software or the hardware. '∼ unit' may be configured to be in an addressable storage medium or may be configured to reproduce one or more processors. Thus, as an example, '∼ unit' includes components such as software components, object-oriented software components, class components and task components, processes, functions, attributes, procedures, sub-routines, segments of program code, drivers, firmware, microcode, circuitry, data, databases, data structures, tables, arrays, and variables. Functionalities provided in the components and '∼ units' may be combined into fewer components and '∼ units' or may be further divided into additional components and '∼ units'. Besides, the components and '∼ units' may be implemented to reproduce one or more central processing units (CPUs) within a device or a security multimedia card. In addition, '∼ unit' may include one or more processors in an embodiment.

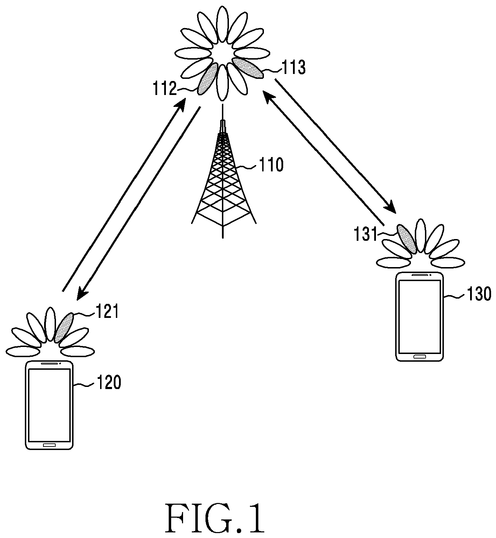

FIG. 1 illustrates a wireless communication system according to various embodiments of the present disclosure. FIG. 1 depicts a base station 110, a terminal 120, and a terminal 130, as some of nodes which use a radio channel in the wireless communication system. While FIG. 1 depicts only one base station, other base station which is identical or similar to the base station 110 may be further included.

The base station 110 is a network infrastructure for providing radio access to the terminals 120 and 130. The base station 110 has coverage defined as a specific geographical area based on a signal transmission distance. The base station 110 may be referred to as, besides the base station, an access point (AP), an eNodeB (eNB), a gNodeB (gNB), a 5th generation node (5G node), a wireless point, a transmission/reception point (TRP), or other terms having a technically identical meaning.

The terminal 120 and the terminal 130 each are a device used by a user, and communicate with the base station 110 over a radio channel. In some cases, at least one of the terminal 120 and the terminal 130 may operate without user's involvement. That is, at least one of the terminal 120 and the terminal 130 is a device which performs machine type communication (MTC), and may not be carried by the user. The terminal 120 and the terminal 130 each may be referred to as, besides the terminal, a user equipment (UE), a mobile station, a subscriber station, a remote terminal, a wireless terminal, a user device, or other term having a technically equivalent meaning.

The base station 110, the terminal 120, and the terminal 130 may transmit and receive radio signals in a millimeter wave (mmWave) band (e.g., 28 GHz, 30 GHz, 38 GHz, 60 GHz). In so doing, to improve channel gain, the base station 110, the terminal 120, and the terminal 130 may conduct beamforming. Herein, the beamforming may include transmit beamforming and receive beamforming. That is, the base station 110, the terminal 120, and the terminal 130 may apply directivity to a transmit signal or a received signal. For doing so, the base station 110 and the terminals 120 and 130 may select serving beams 112, 113, 121, and 131 through a beam search or beam management procedure. After the serving beams 112, 113, 121, and 131 are selected, communications may be performed using resources which are quasi co-located (QCL) with resources which carry the serving beams 112, 113, 121, and 131.

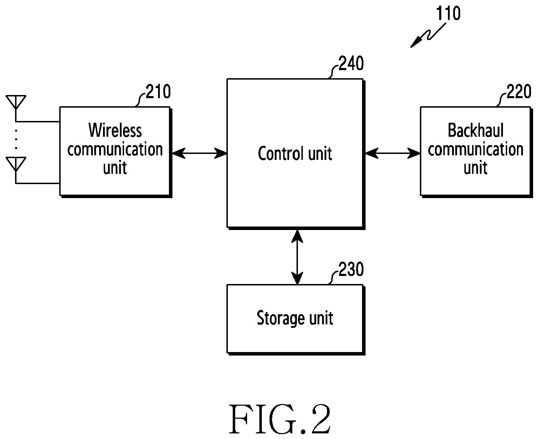

FIG. 2 illustrates a configuration of a base station in a wireless communication system according to various embodiments of the present disclosure. The configuration in FIG. 2 may be understood as the configuration of the base station 110. A term such as 'portion' or '∼ er' used hereafter indicates a unit for processing at least one function or operation, and may be implemented using hardware, software, or a combination of hardware and software.

Referring to FIG. 2, the base station includes a wireless communication unit 210, a backhaul communication unit 220, a storage unit 230, and a control unit 240.

The wireless communication unit 210 may perform functions for transmitting and receiving signals over a radio channel. For example, the wireless communication unit 210 performs a conversion function between a baseband signal and a bit string according to a physical layer standard of the system. For example, in data transmission, the wireless communication unit 210 generates complex symbols by encoding and modulating a transmit bit string. Also, in data reception, the wireless communication unit 210 restores a receive bit string by demodulating and decoding a baseband signal.

Also, the wireless communication unit 210 up-converts the baseband signal to a radio frequency (RF) band signal, transmits it via an antenna, and down-converts an RF band signal received via an antenna to a baseband signal. For doing so, the wireless communication unit 210 may include a transmit filter, a receive filter, an amplifier, a mixer, an oscillator, a digital to analog convertor (DAC), an analog to digital convertor (ADC), and so on. In addition, the wireless communication unit 210 may include a plurality of transmit and receive paths. Further, the wireless communication unit 210 may include at least one antenna array including a plurality of antenna elements.

In terms of the hardware, the wireless communication unit 210 may include a digital unit and an analog unit, and the analog unit may include a plurality of sub-units according to an operating power and an operating frequency. The digital unit may be implemented with at least one processor (e.g., a digital signal processor (DSP)).

The wireless communication unit 210 transmits and receives the signals as stated above. Hence, whole or part of the wireless communication unit 210 may be referred to as 'a transmitter', 'a receiver', or 'a transceiver'. Also, in the following explanations, the transmission and the reception over the radio channel is used as the meaning which embraces the above-stated processing of the wireless communication unit 210. In some embodiments, the wireless communication unit 210 may perform functions for transmitting and receiving a signal using wired communication.

The backhaul communication unit 220 provides an interface for communicating with other nodes in the network. That is, the backhaul communication unit 220 converts a bit sting transmitted from the base station to other node, for example, to other access node, other base station, an upper node, or a core network, to a physical signal, and converts a physical signal received from the other node to a bit string.

The storage unit 230 stores a basic program for operating the base station, an application program, and data such as setting information. The storage unit 230 may include a volatile memory, a non-volatile memory, or a combination of a volatile memory and a non-volatile memory. The storage unit 230 provides the stored data at a request of the control unit 240.

The control unit 240 controls general operations of the base station. For example, the control unit 240 transmits and receives signals through the wireless communication unit 210 or the backhaul communication unit 220. Also, the control unit 240 records and reads data in and from the storage unit 230. The control unit 240 may execute functions of a protocol stack requested by a communication standard. According to another embodiment, the protocol stack may be included in the wireless communication unit 210. For doing so, the control unit 240 may include at least one processor.

According to various embodiments, the control unit 240 may control the base station to perform operations according to various embodiments to be described.

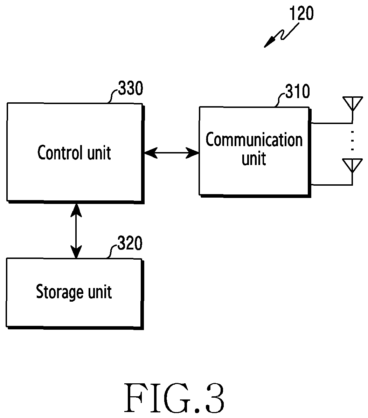

FIG. 3 illustrates a configuration of a terminal in a wireless communication system according to various embodiments of the present disclosure. The configuration illustrated in FIG. 3 may be understood as the configuration of the terminal 120. A term such as 'portion' or '∼ er' used hereafter indicates a unit for processing at least one function or operation, and may be implemented using hardware, software, or a combination of hardware and software.

Referring to FIG. 3, the terminal includes a communication unit 310, a storage unit 320, and a control unit 330.

The communication unit 310 may perform functions for transmitting and receiving signals over a radio channel. For example, the communication unit 310 performs a conversion function between a baseband signal and a bit string according to a physical layer standard of the system. For example, in data transmission, the communication unit 310 generates complex symbols by encoding and modulating a transmit bit string. Also, in data reception, the communication unit 310 restores a receive bit string by demodulating and decoding a baseband signal. Also, the communication unit 310 up-converts the baseband signal to an RF band signal, transmits it via an antenna, and down-converts an RF band signal received via the antenna to a baseband signal. For example, the communication unit 310 may include a transmit filter, a receive filter, an amplifier, a mixer, an oscillator, a DAC, an ADC, and the like.

Also, the communication unit 310 may include a plurality of transmit and receive paths. Further, the communication unit 310 may include at least one antenna array including a plurality of antenna elements. In view of the hardware, the communication unit 310 may include a digital circuit and an analog circuit (e.g., an RF integrated circuit (RFIC)). Herein, the digital circuit and the analog circuit may be implemented as a single package. Also, the communication unit 310 may include a plurality of RF chains. Further, the communication unit 310 may perform the beamforming.

The communication unit 310 transmits and receives the signals as stated above. Hence, whole or part of the communication unit 310 may be referred to as 'a transmitter', 'a receiver', or 'a transceiver'. In addition, the transmission and the reception over the radio channel are used as the meaning which embraces the above-stated processing of the communication unit 310 in the following explanations.

The storage unit 320 stores a basic program for operating the terminal, an application program, and data such as setting information. The storage unit 320 may include a volatile memory, a non-volatile memory, or a combination of a volatile memory and a non-volatile memory. The storage unit 320 provides the stored data according to a request of the control unit 330.

The control unit 330 controls general operations of the terminal. For example, the control unit 330 transmits and receives signals through the communication unit 310. Also, the control unit 330 records and reads data in and from the storage unit 320. The control unit 330 may execute functions of a protocol stack required by a communication standard. For doing so, the control unit 330 may include at least one processor or microprocessor, or may be part of a processor. In addition, part of the communication unit 310 and the control unit 330 may be referred to as a communication processor (CP).

According to various embodiments, the control unit 330 may control the terminal to carry out operations according to various embodiments to be explained.

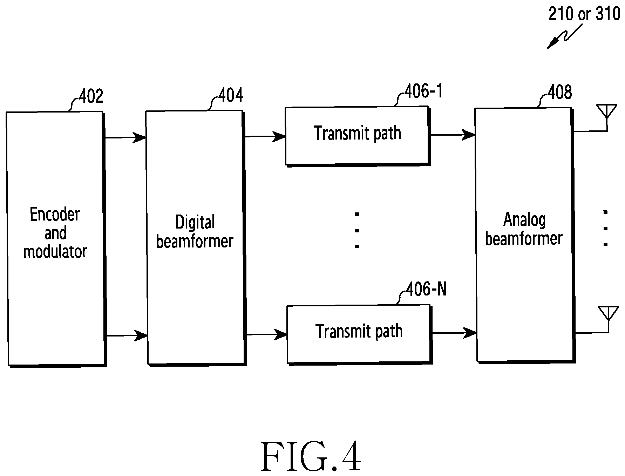

FIG. 4 illustrates a configuration of a communication unit in a wireless communication system according to various embodiments of the present disclosure. FIG. 4 depicts an example of a detailed configuration of the wireless communication unit 210 of FIG. 2 or the communication unit 310 of FIG. 3. More specifically, FIG. 4 illustrates components for performing the beamforming, as part of the wireless communication unit 210 of FIG. 2 or the communication unit 310 of FIG. 3.

Referring to FIG. 4, the wireless communication unit 210 or the communication unit 310 includes an encoder and modulator 402, a digital beamformer 404, a plurality of transmit paths 406-1 through 406-N, and an analog beamformer 408.

The encoder and modulator 402 performs channel encoding. For the channel encoding, at least one of low density parity check (LDPC) code, convolution code, and polar code may be used. The encoder and modulator 402 generates modulation symbols by performing constellation mapping.

The digital beamformer 404 beamforms a digital signal (e.g., the modulation symbols). For doing so, the digital beamformer 404 multiplies the modulation symbols by beamforming weights. Herein, the beamforming weights are used to change an amplitude and a phase of the signal, and may be referred to as a 'precoding matrix' or a 'precoder'. The digital beamformer 404 outputs the digital-beamformed modulation symbols to the plurality of the transmit paths 406-1 through 406-N. In so doing, according to a multiple input multiple output (MIMO) transmission scheme, the modulation symbols may be multiplexed, or the same modulation symbols may be provided to the plurality of the transmit paths 406-1 through 406-N.

The plurality of the transmit paths 406-1 through 406-N convert the digital-beamformed digital signals to analog signals. For doing so, the plurality of the transmit paths 406-1 through 406-N each may include an inverse fast Fourier transform (IFFT) operator, a cyclic prefix (CP) adder, a DAC, and an up-converter. The CP adder is used for an orthogonal frequency division multiplexing (OFDM) scheme, and may be excluded if other physical layer scheme (e.g., filter bank multi-carrier (FBMC)) is applied. That is, the plurality of the transmit paths 406-1 through 406-N provide an independent signal process for a plurality of streams generated through the digital beamforming. Yet, depending on the implementation, some of the components of the transmit paths 406-1 through 406-N may be used in common.

The analog beamformer 408 beamforms the analog signals. For doing so, the digital beamformer 404 multiplies the analog signals by the beamforming weights. Herein, the beamforming weights are used to change the amplitude and the phase of the signal. More specifically, the analog beamformer 408 may be configured variously, according to a connection structure between the plurality of the transmit paths 406-1 through 406-N and the antennas. For example, each of the plurality of the transmit paths 406-1 through 406-N may be connected to one antenna array. As another example, the plurality of the transmit paths 406-1 through 406-N may be connected to one antenna array. As yet another example, the plurality of the transmit paths 406-1 through 406-N may be adaptively connected to one antenna array, or two or more antenna arrays.

The wireless communication system not only provides an initial voice-oriented service, but also is evolving to, for example, a broadband wireless communication system which provides high-speed and high-quality packet data services such as high speed packet access (HSPA) of 3GPP, long term evolution (LTE), evolved universal terrestrial radio access (E-UTRA), and LTE-advanced (LTE-A), high rate packet data (HRPD) of 3GPP2, ultra mobile broadband (UMB), and/or institute of electrical and electronics engineers (IEEE) 802.16e communication standard. In addition, a communications standard of 5^{th} generation (5G) or the NR as the 5G wireless communication system is being made.

The NR system which is a representative example of the broadband wireless communication system employs the OFDM scheme in downlink (DL) and uplink. More specifically, the NR system employed a cyclic-prefix OFDM (CP-OFDM) scheme for the DL, and CP-OFDM and discrete Fourier transform spreading OFDM (DFT-S-OFDM) schemes for the uplink. In various embodiments of the present disclosure, the uplink indicates a radio link on which the terminal transmits data or a control signal to the base station, and the DL indicates a radio link on which the base station transmits data or a control signal to the terminal. The multiple access scheme such as OFDM, CP-OFDM and/or DFT-S-OFDM described above, allocates and/or operates radio resources not to overlap time-frequency resources for carrying data or control information for each user with those of other user, that is, to establish orthogonality, and thus the data or the control information of each user is distinguished.

In addition, the NR system is designed to freely multiplex various services in the time and frequency resources, and accordingly a waveform, numerology, and/or a reference signal may be dynamically or freely allocated according to needs of a corresponding service in the NR system. To provide an optimal service to the terminal in the wireless communication, optimized data transmission based on measurements of channel quality and interference amount is important, and accurate channel measurement is essential for the optimized data transmission. However, since a 5G channel considerably changes in channel and interference characteristics depending on the service unlike a 4G channel which does not significantly change in channel and interference characteristics depending on the frequency resource, it is necessary to support a subset of a frequency resource group (FRG) unit for measuring the channel and interference characteristics on a specific frequency basis.

Meanwhile, types of services supported in the NR system may be divided into categories such as enhanced mobile broadband (eMBB), massive machine type communications (mMTC), and ultra-reliable and low-latency communications (URLLC). For example, the eMBB may be a service targeting a high-speed transmission of high-capacity data, the mMTC may be a service targeting terminal power minimization and connections multiple terminals, and the URLLC may be a service targeting high reliability and low latency. Different requirements may be applied according to the type of the service applied to the terminal. As mentioned above, a plurality of services may be provided to a user in the communication system, and an apparatus and a method for providing each service within the same time period according to the characteristics of each service are demanded to provide the plurality of the services to the user.

If decoding failure for data occurs in initial transmission, the NR system employs a hybrid automatic repeat request (HARQ) scheme which retransmits corresponding data in a physical layer. If the receiving device fails to accurately decode data, the HARQ scheme allows the receiving device to transmit negative acknowledgment (NACK) notifying the decoding failure to the transmitting device so that the transmitting device may retransmit the corresponding data in the physical layer. The receiving device may improve data reception performance by combining the data retransmitted by the transmitting device with the data previously failed in decoding. In addition, if the receiving device correctly decodes the data, the HARQ scheme allows the receiving device to transmit information (acknowledgment (ACK)) notifying the decoding success to the transmitting device so that the transmitting device may transmit new data.

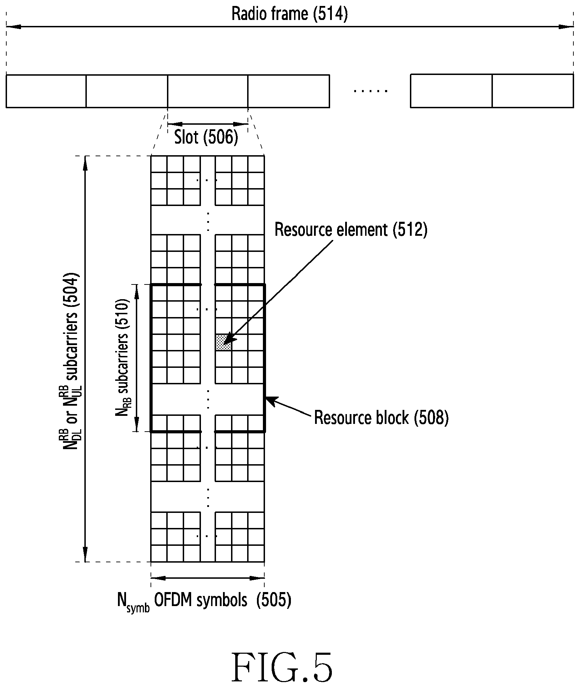

FIG. 5 illustrates a structure of a time-frequency domain in which data or control information is transmitted in DL downlink or uplink in a wireless communication system according to various embodiments of the present disclosure.

Referring to FIG. 5, a horizontal axis represents the time domain, and a vertical axis represents the frequency domain in FIG. 5. A minimum transmission unit of the time domain is an OFDM symbol, and N_{symb}-ary OFDM symbols 502 may configure one slot 506. A length of a subframe may be defined as 1.0 ms, and a length of a radio frame 514 may be defined as 10 ms. A minimum transmission unit of the frequency domain is a subcarrier, and a bandwidth of the entire system transmission bandwidth may include N_{BW}-ary subcarriers 504 in total.

A basic unit of the resource in the time-frequency domain may be a resource element (RE) 512, and an RE 502 may be represented by an OFDM symbol index and a subcarrier index. A resource block (RB) or a physical resource block (PRB) 508 may be defined as one OFDM symbol in the time domain and N_{RB}-ary subcarriers in the frequency domain. Hence, one RB 508 may include N_{RB}-ary RE 512. In various embodiments, a minimum transmission unit of data may be the RB. N_{symb} = 14 and N_{RB} = 12 in the NR system, and N_{BW} and N_{RB} are proportional to the bandwidth of the system transmission band. A data rate may increase in proportion to the number of RBs scheduled to the terminal.

In frequency division duplex (FDD) in which the DL and the uplink are distinguished by the frequency in the NR system, a downlink transmission bandwidth and an uplink transmission bandwidth may be different from each other. A channel bandwidth represents a radio frequency (RF) bandwidth corresponding to the system transmission bandwidth. Table 1 and Table 2 show correspondence between the system transmission bandwidth defined in the NR system, the subcarrier spacing (SCS) and the channel bandwidth in a frequency band lower than 6 GHz and a frequency band higher than 6 GHz.

**[Table 1]**

| | | **Channel Bandwidth (BW_{Channel})[MHz]** | | | | | |
|---|---|---|---|---|---|---|---|
| | | 5 | 10 | 20 | 50 | 80 | 100 |
| **Sub carrier spcacing (SCS)** | 15kHz | 25 | 52 | 106 | 270 | N/A | N/A |
| | 30kHz | 11 | 24 | 51 | 133 | 217 | 273 |
| | 60kHz | N/A | 11 | 24 | 65 | 107 | 135 |

**[Table 2]**

| | | **Channel Bandwidth (BW_{Channel})[MHz]** | | | |
|---|---|---|---|---|---|
| | | 5 | 10 | 20 | 50 |
| **Sub carrier spcacing (SCS)** | 60kHz | 132 | 264 | N/A | 270 |

For example, if the SCS is 30 kHz and the channel bandwidth is 100 MHz, the transmission bandwidth may include 273 RBs. N/A in <Table 1> and <Table 2> may correspond to a bandwidth-subcarrier combination which is not supported in the NR system. Scheduling information for downlink data or uplink data in the NR system may be transmitted from the base station to the terminal through downlink control information (DCI). The DCI is defined according to various formats, each format may indicate that the DCI is scheduling information (e.g., UL grant) of uplink data, scheduling information (DL grant) of DL data, compact DCI having small-sized control information, DCI for applying spatial multiplexing using multiple antennas, or DCI for power control. For example, the DCI format 1-1which is the scheduling control information (DL grant) of the DL data may include at least one following control information:
- carrier indicator: indicating a frequency carrier for transmission
- DCI format identifier: indicating the DCI for DL or the DCI for UL
- bandwidth part (BWP) indicator: indicating the BWP for transmission
- frequency domain resource assignment: indicating RBs of the frequency domain allocated for data transmission. The resource represented by the frequency domain resource assignment is determined according to the system bandwidth and resource assignment scheme.
- time domain resource assignment: indicating a slot and an OFDM symbol transmitting a data-related channel
- VRB-to-PRB mapping: indicating a scheme which maps a virtual RB (VRB) index and a physical RB (PRB) index
- modulation and coding scheme (MCS): indicating the modulation scheme used for the data transmission and a size of a transport block which is the data to transmit.
- HARQ process number: indicating an HARQ process number of
- new data indicator (NDI): indicating initial HARQ transmission or retransmission
- redundancy version (RV): indicating a redundancy version of HARQ
- transmit power control (TPC) command for a physical uplink control channel (PUCCH): indicating a TPC command for a PUCCH which is a UL control channel

For example, in the data transmission through a physical uplink shared channel (PUSCH), the time domain resource assignment may indicate information of the slot transmitting the PUSCH, and a start symbol position S in a corresponding slot and the number L of symbols to which the PUSCH is mapped. Herein, S may be a relative position from the start of the slot, L may be the number of consecutive symbols, and S and L may be determined from a start and length indicator value (SLIV). For example, if (L-1)≤7, SLIV=14·(L-1)+S, otherwise SLIV=14·(14-L+1)+(14-1-S). Herein, 0<L≤14-S may be satisfied.

The terminal in the NR system may receive slot information in the form of a table indicating a SLIV value, a PUSCH mapping type, and a PUSCH in one row, through radio resource control (RRC) configuration. Next, the base station may transmit to the terminal the DCI including the time domain resource assignment indicating the index value in the configured table, and thus carry the information of the slot transmitting the SLIV value, the PUSCH mapping type, and the PUSCH to the terminal.

In the NR system, the PUSCH mapping type may include a type A and a type B. According to the PUSCH mapping type A, a first symbol of demodulation reference signal (DMRS) symbols is positioned in a second or third OFDM symbol of the slot. According to PUSCH mapping type B, the first symbol of the DMRS symbols is positioned in the first OFDM symbol in the time domain resource assigned for PUSCH transmission.

The DCI may be transmitted on a physical downlink control channel (PDCCH) through channel coding and modulation. According to various embodiments of the present disclosure, transmitting the control information via the PDCCH or the PUCCH may be expressed as transmitting the PDCCH or the PUCCH. Similarly, transmitting data via the PUSCH or the PDSCH may be expressed as transmitting the PUSCH or the PDSCH.

Cyclic redundancy check (CRC) scrambled with a specific radio network temporary identifier (RNTI) (or terminal identifier) is added to the DCI independently for each terminal, channel coding is applied to the DCI, and then the DCI is configured and transmitted as an individual independent PDCCH. The PDCCH may be mapped and transmitted in a control resource set (CORESET) configured to the terminal.

DL data may be transmitted on a physical downlink shared channel (PDSCH) which is a physical channel for downlink data transmission. The PDSCH may be transmitted after the control channel transmission period, and scheduling information such as a specific mapping position in the frequency domain and a modulation scheme for the PDSCH may be determined based on the DCI transmitted through the PDCCH.

Through the MCS among the control information including the DCI, the base station may notify the terminal of the modulation scheme applied to the PDSCH to transmit and the data size (a transport block size, TBS) to transmit. In various embodiments, the MCS may include 5 bits or more or fewer bits. The TBS corresponds to a TB size before the channel coding for error correction is applied to the data (a transport block, TB) to be transmitted by the base station.

In various embodiments, the TB may include at least one of a medium access control (MAC) header, a MAC control element (CE), one or more MAC service data units (SDUs), and padding bits. Alternatively, the TB may indicate a data unit or a MAC protocol data unit (PDU) delivered from the MAC layer to the physical layer.

The modulation schemes supported in the NR system may include quadrature phase shift keying (QPSK), quadrature amplitude modulation (16QAM), 64QAM, and 256QAM, and each modulation order (Qm) corresponds to 2, 4, 6, and 8. That is, 2 bits per symbol in the QPSK modulation, 4 bits per symbol in the 16QAM modulation, 6 bits per symbol in the 64QAM modulation, and 8 bits per symbol in the 256QAM modulation may be transmitted.

In various embodiments of the present disclosure, the terms of the physical channel and the signal may be used interchangeably with the data or the control signal. For example, the PDSCH is the physical channel carrying data, but the PDSCH may be referred to as data in the present disclosure.

In various embodiments of the present disclosure, higher layer signaling indicates signal delivery from the base station to the terminal through the DL data channel of the physical layer or from the terminal to the base station through the UL data channel of the physical layer, and may include, for example, RRC signaling or MAC CE signaling.

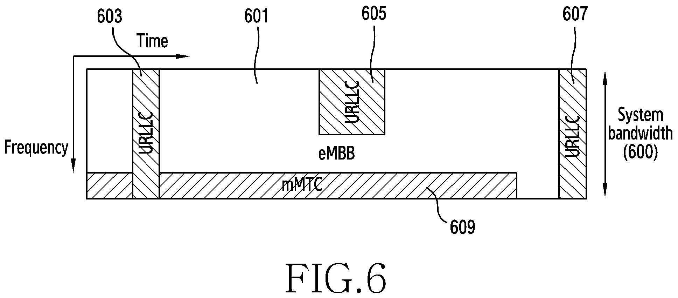

FIG. 6 illustrates an example in which data for eMBB, URLLC, and mMTC are allocated to time-frequency resources in a wireless communication system according to various embodiments of the present disclosure.

Referring to FIG. 6, FIG. 6 illustrates a pattern in which data for eMBB, URLLC, and mMTC are allocated in a total system bandwidth 600. While eMBB data 601 and mMTC data 609 are allocated and transmitted in a specific frequency band, URLLC data 603, 605, and 607 may occur and transmission of the URLLC data 603, 605, and 607 may be required. In this case, by emptying or not transmitting portions in which the eMBB data 601 and the mMTC data 609 are already assigned, the URLLC data 603, 605, and 607 may be transmitted in the corresponding portions. Since the URLLC service needs to reduce delay time, the URLLC data 603, 605, and 607 may be allocated and transmitted in one portion of the resource assigned the eMBB data 601. If the URLLC data 603, 605, and 607 are additionally assigned and transmitted in the resource assigned the eMBB data 601, the eMBB data 601 may not be transmitted in the overlapping frequency-time resource, and accordingly transmission performance of the eMBB data 601 may be reduced. In other words, transmission failure of the eMBB data 601 may result from the assignment of the URLLC data 603, 605, and 607.

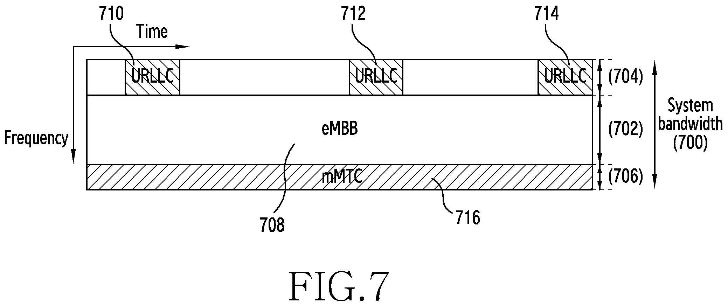

FIG. 7 illustrates another example in which data for eMBB, URLLC, and mMTC are allocated to time-frequency resources in a wireless communication system according to various embodiments of the present disclosure.

Referring to FIG. 7, a whole system bandwidth 700 may be divided into subbands 702, 704, and 706, and each subband may be used to transmit service and data. Information related to subband configuration (or information related to the subband) may be predetermined, or may be transmitted from the base station to the terminal through the higher layer signaling. Alternatively, the base station or the network node may provide services to the terminal without transmitting separate subband configuration information to the terminal. In FIG. 7, the subband 302 may be used for transmission of eMBB data 708, the subband 704 may be used for transmission of URLLC data 710, 712, and 714, and the subband 706 may be used for transmission of mMTC data 716.

In various embodiments, a length of a transmission time interval (TTI) used for the transmission of the URLLC data 710, 712, and 714 may be shorter than a length of a TTI used for the transmission of the eMBB data 708 or the mMTC data 716. In addition, a response of information related to the URLLC may be transmitted more promptly than a response of information related to the eMBB or information related to the mMTC, and accordingly, the information related to the URLLC may be transmitted with low latency. A structure of a physical layer channel used for each service or data may be different to transmit the abovementioned three services or data (e.g., eMBB, URLLC, and mMTC). For example, at least one of the TTI length, a frequency resource assignment unit, a control channel structure or a data mapping method may be different.

In FIG. 6 and FIG. 7, the three services and/or data (e.g., eMBB, URLLC, and mMTC) have been described, but which are exemplary, there may be more types of services and data corresponding to each service, wherein various embodiments of the present disclosure may be applied in this case.

Hereinafter, a method and an apparatus for performing data communication between a base station and a terminal or terminals are provided. In various embodiments of the present disclosure, a data transmission type may include transmitting data from one terminal to a plurality of terminals, or transmitting data from one terminal to one terminal. Alternatively, the data transmission type may include transmitting data from a base station to a plurality of terminals. However, various embodiments of the present disclosure are not limited to the above-described types, and various modifications are possible.

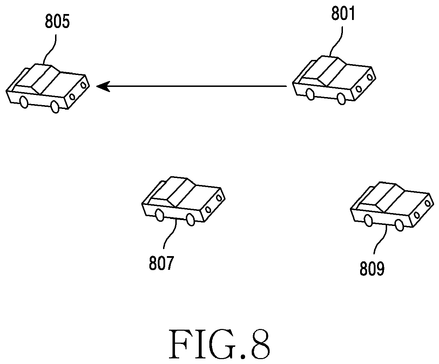

FIG. 8 illustrates an example of performing unicast communication between terminals through a sidelink in a wireless communication system according to various embodiments of the present disclosure.

Referring to FIG. 8, a terminal 801 (e.g., the terminal 120) may transmit a signal to terminal 805 (e.g., the terminal 130). Although not depicted, the terminal 805 may transmit a signal to the terminal 801. Other terminals 807 and 809 than the terminal 801 and the terminal 805 may not receive a signal exchanged between the terminal 801 and the terminal 805 through the unicast. The signal exchange through the unicast between the terminal 801 and the terminal 805 may be performed by mapping the exchanged data to a resource agreed between the terminal 801 and the terminal 805, or may be performed based on at least one of scrambling using a mutually agreed value, control information mapping, data transmission using a set value, and a method of identifying a mutual unique ID value. In various embodiments, the plurality of the terminals 801, 805, 807, and 809 may include a vehicle terminal. In various embodiments, separate control information, a physical control channel, and/or data may be transmitted for the unicast transmission.

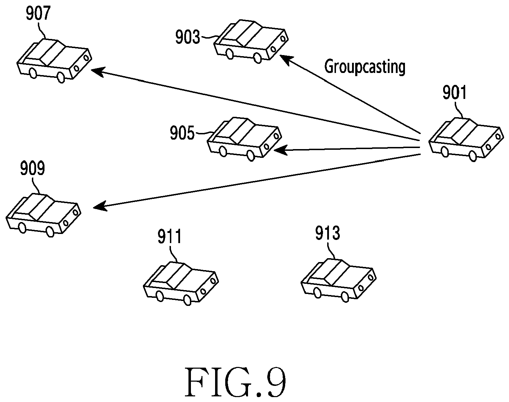

FIG. 9 illustrates an example of performing group cast communication through a sidelink in a wireless communication system according to various embodiments of the present disclosure.

Referring to FIG. 9, a terminal 901 (e.g., the terminal 120) may transmit common data to a plurality of terminals 903, 905, 907, and 909 through the sidelink. A signal transmitted for the groupcast may be received by the plurality of the terminals 903, 905, 907, and 909 in the group, but other terminals 911 and 913 not included in the group may not receive the signal transmitted for the group cast.

The terminal 901 transmitting the groupcast signal may be other terminal in the group, and resource assignment for the groupcast signal transmission may be provided by the base station, or provided by a terminal serving as a leader in the group, or determined by the terminal 901 itself. In various embodiments, the terminals 901, 903, 907, 905, 909, 911, and 913 may include a vehicle terminal. In addition, separate control information, a physical control channel, and/or data may be transmitted for the groupcast transmission.

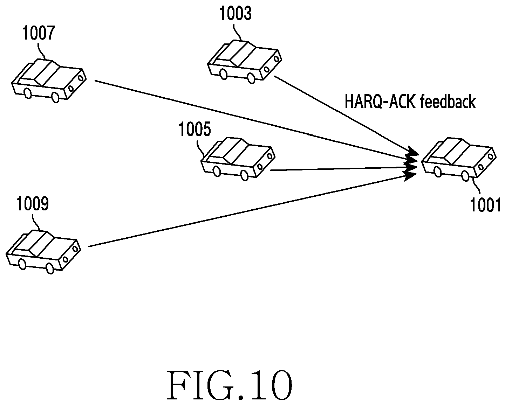

FIG. 10 illustrates an example of transmitting feedback information indicating reception success or reception failure of groupcast data in a wireless communication system according to various embodiments of the present disclosure.

Referring to FIG. 10, terminals 1003, 1005, 1007, and 1009 receiving common data through groupcasting may transmit feedback information (e.g., HARQ-ACK feedback information) indicating whether the groupcast data is successfully received to a terminal 1001 which transmits the common data. In various embodiments, the terminals 1001, 1003, 1005, 1007, and 1009 may support an LTE and/or NR-based sidelink function. If the terminals 1001, 1003, 1005, 1007, and 1009 support the LTE-based sidelink function but may not support the NR-based sidelink function, the terminals 1001, 1003, 1005, 1007, 1009 may not perform transmission and reception of the NR-based sidelink and the physical channel.

In various embodiments of the present disclosure, the sidelink may be interchangeably used with PC5, vehicle to everything (V2X) or device to device (D2D).

FIG 9 and FIG. 10 explain the example of the data transmission and reception according to the groupcasting, but the embodiments of FIG. 9 and FIG. 10 may be applied even if the transmission and reception of the unicast signal is performed between terminals.

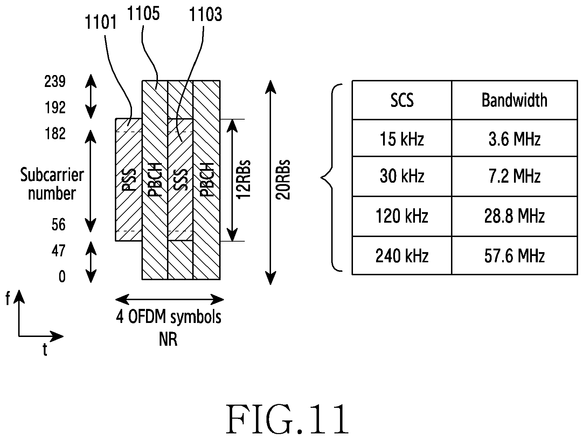

FIG. 11 illustrates a structure of resources to which a synchronization signal (SS) and a physical broadcast channel are mapped in a wireless communication system according to various embodiments of the present disclosure.

Referring to FIG. 11, a primary synchronization signal (PSS) 1101, a secondary synchronization signal (SSS) 1103 and a PBCH 1105 are mapped to four consecutive OFDM symbols. The PSS 1101 and the SSS 1103 may be mapped to 12 RBs, and the PBCH 1105 may be mapped to 20 RBs. In various embodiments, a resource region carrying a PSS (e.g., the PSS 1101), a SSS (e.g., the SSS 1103), and a PBCH (e.g., the PBCH 1105) may be referred to as an SS/PBCH block or a synchronization signal block (SSB).

In various embodiments, a frequency band of 20 RBs to which the SS/PBCH block is mapped may change according to the SCS. For example, if the SCS is 15 kHz, the frequency band to which the SS/PBCH block is mapped is 3.6 MHz. As another example, if the SCS is 30 kHz, the frequency band to which the SS/PBCH block is mapped is 7.2 MHz. As another example, if the SCS is 120 kHz, the frequency band to which the SS/PBCH block is mapped is 28.8 MHz. As another example, if the SCS is 240 kHz, the frequency band to which the SS/PBCH block is mapped is 57.6 MHz.

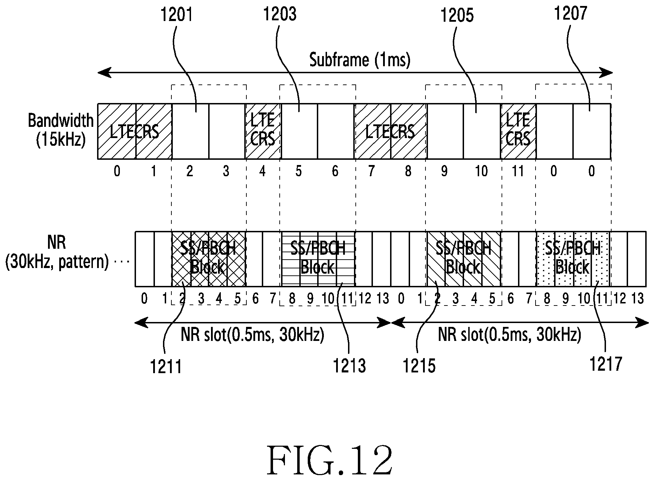

FIG. 12 illustrates symbols to which SS/PBCH blocks are mapped in a slot in a wireless communication system according to various embodiments of the present disclosure.

Referring to FIG. 12, an LTE system adopting the SPS of 15 kHz and an NR system adopting the SPS of 30 kHz are illustrated. In the NR system, SS/PBCH blocks 1211, 1213, 1215, and 1217 are transmitted at a different position from a position transmitting cell-specific reference signals (CRSs) 1201, 1203, 1205, and 1207 always transmitted in the LTE system. Hence, the LTE system and the NR system may coexist in one frequency band.

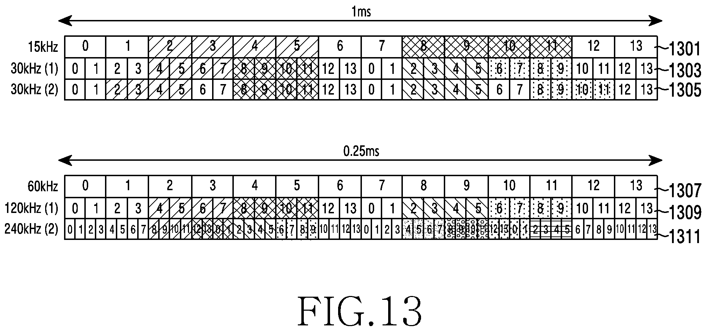

FIG. 13 illustrates an example of symbols for transmitting an SS/PBCH block according to an SCS in a wireless communication system according to various embodiments of the present disclosure.

Referring to FIG. 13, the SCS may be set to one of 15 kHz, 30 kHz, 120 kHz, and 240 kHz, and positions of symbols for carrying the SS/PBCH block (or SSB) may be determined according to each SCS. FIG. 13 illustrates positions of symbols for carrying SSBs according to the SCS in symbols within 1 ms, and the SSB is not always transmitted in the region illustrated in FIG. 13. In other words, FIG. 13 illustrates positions of candidate symbols for carrying the SSB according to the SCS.

For example, if the SCS is 15 kHz 1301, an index of a first symbol of the SS/PBCH block within 1 ms may be {2, 8}.

For example, if the SCS is 30 kHz 1303, the index of the first symbol of the SS/PBCH block within 1 ms may be {4, 8} in the first slot and {2, 6} in the second slot.

For example, if the SCS is 30 kHz 1305, the index of the first symbol of the SS/PBCH block within 1 ms may be {2, 8} in the first slot and {2, 8} in the second slot.

For example, the SCS of the SS/PBCH block may not be 60 kHz 1307.

For example, if the SCS is 120 kHz, the index of the first symbol of the SS/PBCH block within 0.25 ms may be {4, 8} in the first slot and {2, 6} in the second slot.

For example, if the SCS is 240 kHz, the index of the first symbol of the SS/PBCH block within 0.25 ms may be {8, 12} in the first slot, {2, 6} in the second slot, {4, 8, 12} in the third slot, and 2 in the fourth slot.

In various embodiments, the positions of the symbols for carrying the SSB may be configured in the terminal through system information or dedicated signaling.

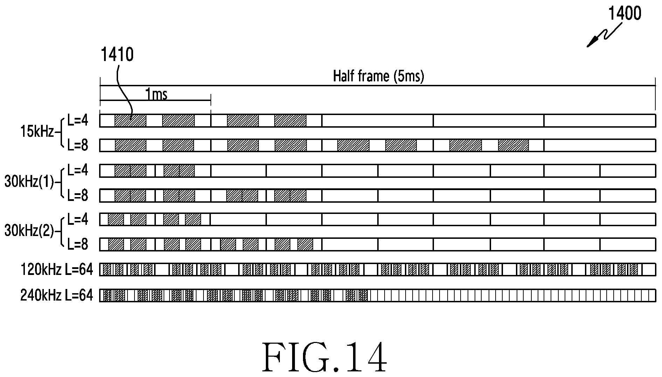

FIG. 14 illustrates another example of symbols for transmitting an SS/PBCH block according to an SCS in a wireless communication system according to various embodiments of the present disclosure.

Referring to FIG. 14, the SCS may be set to one of 15 kHz, 30 kHz, 120 kHz, and 240 kHz, and positions of symbols for carrying an SS/PBCH block (or SSB) may be determined according to each SCS. FIG. 14 illustrates the positions of the symbols for carrying the SSB according to the SCS in symbols within a half frame 1400 (i.e., 5 ms). In various embodiments, the positions of the symbols carrying the SSB may be configured in the terminal through system information or dedicated signaling. The SS/PBCH block is not always transmitted in the region for transmitting the SS/PBCH block (e.g., an SSB block 1410) be transmitted, and for example, the SS/PBCH block may or may not be transmitted according to selection of the base station.

In various embodiments of the present disclosure, a sidelink control channel may be referred to as a physical sidelink control channel (PSCCH), and a sidelink shared channel or data channel may be referred to as a physical sidelink shared channel (PSSCH). In addition, a broadcast channel broadcast with an SS may be referred to as a physical sidelink broadcast channel (PSBCH), and a channel for transmitting feedback information may be referred to as a physical sidelink feedback channel (PSFCH). In various embodiments, the PSCCH or the PSSCH may be used to transmit feedback information. In various embodiments, the PSCCH and the PSSCH may be referred to as LTE-PSCCH, LTE-PSSCH, NR-PSCCH, or NR-PSSCH depending on the communication system (e.g., the NR system, the LTE system). In the present disclosure, the sidelink may indicate a link between terminals, and a Uu link may indicate a link between the base station and the terminal.

Various embodiments may be applied if the base station schedules data transmission of the sidelink for communication between terminals in the wireless communication system.

Definitions of terms used in various embodiments of the present disclosure are as follows:

"Sidelink" indicates a communication scheme in which the terminal communicates directly with other terminal without going through the base station.

"Sidelink data" indicates data transmitted on the sidelink. In various embodiments, "sidelink data" may have the same meaning as "sidelink transmission" and "sidelink data transmission", and may be used interchangeably.

"Sidelink channel" indicates a channel between terminals which perform communication in the sidelink.

"Radio access channel" indicates a channel between the base station and the terminal.

"Channel state information (CSI)" indicates channel state information of the radio access channel. "Sidelink-CSI (SL-CSI)" indicates channel state information of the sidelink channel.

"Sidelink feedback information" indicates feedback information provided by a terminal receiving sidelink data to a terminal transmitting the sidelink data. For example, the sidelink feedback information may include at least one of CSI of the sidelink channel, HARQ-ACK feedback information for sidelink data, sidelink scheduling request (SL-SR), sidelink control information (SCI), or sidelink buffer status report (SL-BSR). In various embodiments, 'sidelink feedback information' may have the same meaning as "sidelink feedback information", "sidelink feedback", and "sidelink feedback control information (SFCI)", and may be used interchangeably. The SFCI may be transmitted through a physical sidelink feedback control channel (PSFCH).

"Feedback information for sidelink data" indicates sidelink feedback information related to the sidelink data. For example, the feedback information for the sidelink data may include HARQ-ACK feedback information for the sidelink data.

"HARQ-ACK" indicates information indicating whether the receiving terminal successfully receives data transmitted by the transmitting terminal to the receiving terminal. In various embodiments, "HARQ-ACK" may have the same meaning as "HARQ-ACK feedback", "HARQ-ACK information", and "HARQ-ACK feedback information", and may be used interchangeably.

"Sidelink groupcast data" indicates sidelink data transmitted based on the groupcast scheme.

### First embodiment

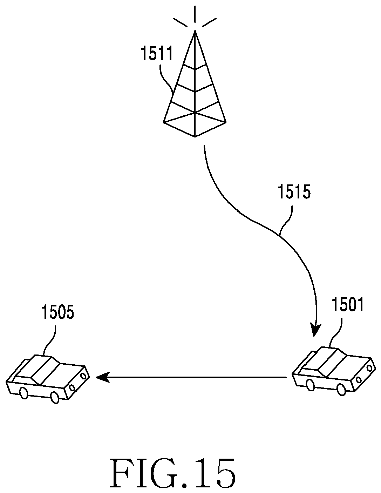

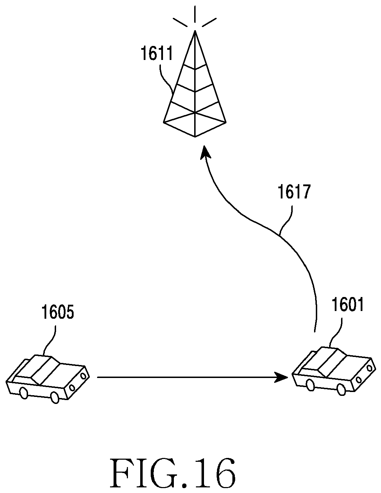

Referring to FIG. 15 and FIG. 16, an example in which the terminal transmits HARQ-ACK information (or HARQ-ACK feedback information) for sidelink data transmission to the base station in an RRC connected state according to the first embodiment is described. In various embodiments, the terminal may transmit a scheduling request for the sidelink data transmission to the base station for the sake of the sidelink data transmission.

FIG. 15 illustrates an example where a base station schedules sidelink data transmission in a wireless communication system according to various embodiments of the present disclosure.

Referring to FIG. 15, a base station 1511 (e.g., the base station 110) may transmit to a terminal 1501 scheduling information for the terminal 1501 (e.g., the terminal 120) to transmit data through a sidelink to a terminal 1505 (e.g., the terminal 130). In FIG. 15, the terminal 1501 transmitting data in the sidelink may be accessed to the base station 1511 (i.e., the RRC connected state). For example, the scheduling information received from the base station 1511 may be transmitted through at least one of DCI on the PDCCH, RRC signaling which is higher layer signaling, or MAC CE. The terminal 1501 may transmit data and a control signal in the sidelink based on the scheduling information from the base station 1501. The transmission of the data and the control signal in the sidelink may include at least one of PSSCH transmission or PSCCH transmission. Herein, the PSCCH may include information of the PSSCH transmission. The PSCCH may be a physical channel carrying SCI, and the SCI may include at least one of a HARQ process ID used for PSSCH transmission, MCS, mapping resource information, NDI, RV, retransmission or not, and information related to time-frequency resources for feedback transmission or timing information for the feedback information. In various embodiments, the communication scheme in which the terminal 1501 receives the scheduling information from the base station 1511 and communicates with other terminal (e.g., the terminal 1505) according to the received scheduling information as shown in FIG. 15 may be referred to as 'NR mode 1 sidelink communication' or 'mode 1 sidelink communication' .

FIG. 16 illustrates an example of transmitting feedback information for a sidelink in a wireless communication system according to various embodiments of the present disclosure.

Referring to FIG. 16, a terminal 1605 (e.g., the terminal 130) may transmit control information such as feedback information to a terminal 1601 (e.g., the terminal 120) through a sidelink, and the terminal 1601 receiving the control information may transmit the control information including the feedback information to a base station 1611 (e.g., the base station 110), or transmit information generated or determined based on the feedback information to the base station 1611. In various embodiments, 'feedback information for the sidelink' may include at least one of the feedback information transmitted in the sidelink or the information generated or determined based on the feedback information transmitted in the sidelink. For example, for the terminal 1601 to transmit the feedback information for the sidelink to the base station 1611, the terminal 1601 must be accessed to the base station 1611 (or the RRC connected state). In various embodiments, the feedback information for the sidelink may be transmitted to the base station 1611 through the PUCCH and the PUSCH. In the present disclosure, the shared channel may be used interchangeably with the data channel. If the terminal 1605 transmits control information such as feedback information to other terminal 1601 through the sidelink, the control information such as feedback information may be transmitted through a physical sidelink feedback channel (PSFCH) or the PSCCH. In various embodiments, the feedback information of the sidelink may also be referred to as SFCI. The control information such as feedback information may include at least one of HARQ-ACK feedback information for sidelink data transmission shown in FIG. 15, or sidelink channel state information measured based on a sidelink reference signal. In various embodiments, the sidelink channel state information may include a measurement result such as a channel quality indicator (CQI), a rank indicator (RI), a precoding matrix indicator (PMI), or radio resource management (RRM) and/or radio link monitoring (RLM).

If the terminal 1601 is being accessed to the base station 1611 (or the RRC connected state), the base station 1601 may configure one or more component carriers (CCs) for DL transmission to the terminal 1601. In addition, DL transmission, UL transmission slots and symbols may be configured in each CC. Meanwhile, if the PDSCH which is downlink data is scheduled, slot timing information to which the PDSCH is mapped in a specific bit field of the DCI, a position of a start symbol among symbols to which the PDSCH is mapped in the corresponding slot, and information related to the number of symbols to which the PDSCH is mapped may be transmitted. For example, if the DCI carried in slot n schedules the PDSCH, and K₀ which is the slot timing information carrying the PDSCH indicates 0, the position of the start symbol is 0, and the number of the symbols is 7, the corresponding PDSCH may be mapped and transmitted from a 0-th symbol to 7 symbols of slot n. In various embodiments, to configure a time domain resource for the PDSCH transmission, a table (hereafter, may be referred to as a PDSCH resource assignment table) indicating information related to the start symbol of the PDSCH of the specific slot and the number of the symbols may be configured in the base station and/or the terminal, and the base station may indicate the time domain resource of the PDSCH to the terminal, by indicating the terminal an index value corresponding to the start symbol of the allocated PDSCH and the number of the symbols using DCI, in the PDSCH resource assignment table. In various embodiments, the PDSCH resource assignment table may be a fixed value, may be preset, and/or may be set by the higher layer signaling. The following <Table 3> is an example of the PDSCH resource assignment table indicating the slot information to which the PDSCH is mapped, the start symbol information, and the number or length information of symbols:

**[Table 3]**

| Row index | dmrs-TypeA-Position | PDSCH mapping type | K₀ | S | L |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

According to <Table 3>, up to 3 PDSCHs may be allocated in one slot. All the three PDSCHs may be related to transmission for one terminal, or may be related to transmission for different terminals respectively. The base station may transmit information together with the start symbol position of each PDSCH to the terminal through the higher layer signaling and/or the DCI. In various embodiments of the present disclosure, the length of the PDSCH or the PUSCH may indicate the number of OFDM symbols to which the PDSCH or PUSCH is mapped. In various embodiments, HARQ-ACK feedback may be transmitted from the terminal to the base station after K₁ slot from the transmission of the downlink data signal PDSCH. K₁ information which is timing information for transmitting the HARQ-ACK feedback may be carried by the DCI. For example, a candidate set of possible K₁ values may be carried by the higher layer signaling, and one K₁ value may be determined by the DCI from the candidate set.

The terminal may transmit HARQ-ACK information including HARQ-ACK feedback bits to the base station. In various embodiments, the HARQ-ACK feedback bits may also be referred to as a 'HARQ-ACK codebook'.

According to an embodiment, the base station may configure to the terminal a semi-static HARQ-ACK codebook allowing the terminal to transmit the HARQ-ACK feedback bits corresponding to the PDSCH which may be transmitted at predetermined timing slot and symbol positions, regardless of the PDSCH transmission. According to the semi-static HARQ-ACK codebook, the number of uplink HARQ-ACK feedback bits to transmit regardless of the scheduling of the base station may be fixed. The semi-static codebook may be, or correspond to a type-1 HARQ-ACK codebook in the NR system.

According to another embodiment, the base station may configure to the terminal a dynamic HARQ-ACK codebook allowing the terminal to transmit the HARQ-ACK feedback bits corresponding to the transmitted PDSCH. In this case, the terminal may determine feedback bits and/or the number of the feedback bits based on a counter downlink assignment index (DAI) and/or a total DAI included in the DCI. According to the dynamic HARQ-ACK codebook, the number of the uplink HARQ-ACK feedback bits to transmit may be determined based on the scheduling information of the base station. The dynamic HARQ-ACK codebook may be or correspond to a type-2 HARQ-ACK codebook in the NR system.

If the terminal is configured with the semi-static HARQ-ACK codebook, the terminal may determine the feedback bits and/or the number of the feedback bits to transmit based on the PDSCH resource assignment table including the slot information to which the PDSCH is mapped, the start symbol information of the PDSCH, the number of symbols of the PDSCH and/or the PDSCH length information, and K₁ candidate values which are the timing information of the HARQ-ACK feedback. The PDSCH resource assignment table including the slot information to which the PDSCH is mapped, the start symbol information of the PDSCH, the number of the symbols of the PDSCH or the PDSCH length information may have a default value, or may be configured to the terminal by the base station. In addition, the K₁ candidate values which are the timing information of the HARQ-ACK feedback for the PDSCH may be a default value such as {1,2,3,4,5,6,7,8}, or the base station may select a set of the K₁ candidate values in the terminal. For example, the base station may configure the set of the K₁ candidate values such as {2,4,6,8,10,12,14,16} to the terminal, and one of these values may be indicated by the DCI.

If a set of candidate PDSCH reception occasions in a serving cell c is M_{A,c}, M_{A,c} may be determined based on the [pseudo-code 1] steps of <Table 4> as follows:

**[Table 4]**

| |
|---|
| [Start pseudo-code 1] - Step 1: Initialize j to 0, M_{A,c} to empty set. Initialize HARQ-ACK transmission timing index(k) to 0. - Step 2: Set R as a set of rows in PDSCH resource allocation table including slot information to which the PDSCH is mapped, start symbol information of the PDSCH, the number of symbols of the PDSCH, and/or length information of the PDSCH. If a symbol to which a PDSCH indicated by a row included in R can be mapped is set as a UL symbol according to DL and UL settings set in a higher layer, the corresponding row is deleted from R. - Step 3-1: If the UE can receive the PDSCH for one unicast in one slot and R is not an empty set, k is added to the set M_{A,c}. - Step 3-2: If the UE can receive more than one PDSCH for unicast in one slot, it counts PDSCHs that can be allocated to different symbols in R, adds j to M_{A,c}, and increases j by 1. Repeat the Steps 3-2 until there are no more allocable PDSCH positions in the slot. - Step 4: Start again from step 2 by incrementing k by 1. [End pseudo-code 1] |

In various embodiments, the steps of the pseudo-code 1 may be executed as shown in pseudo-code 2 of <Table 5> as follows:

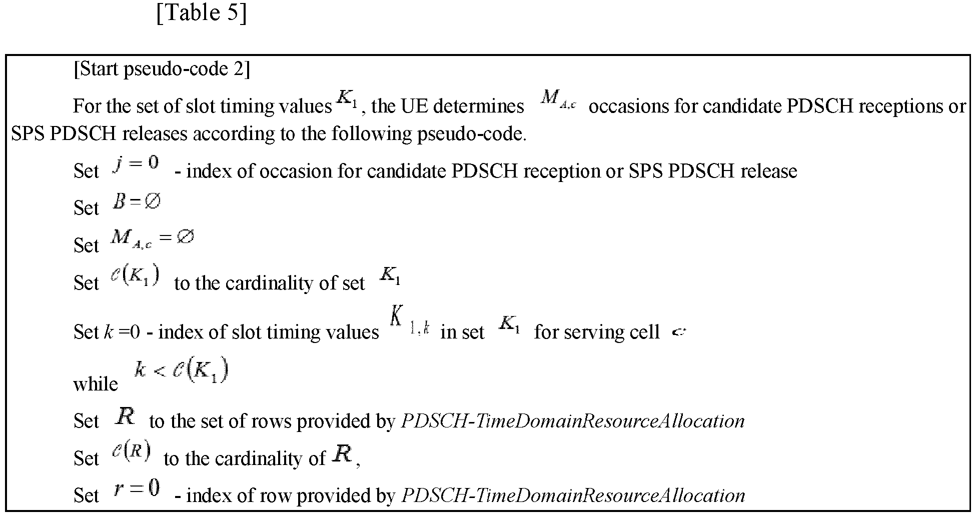

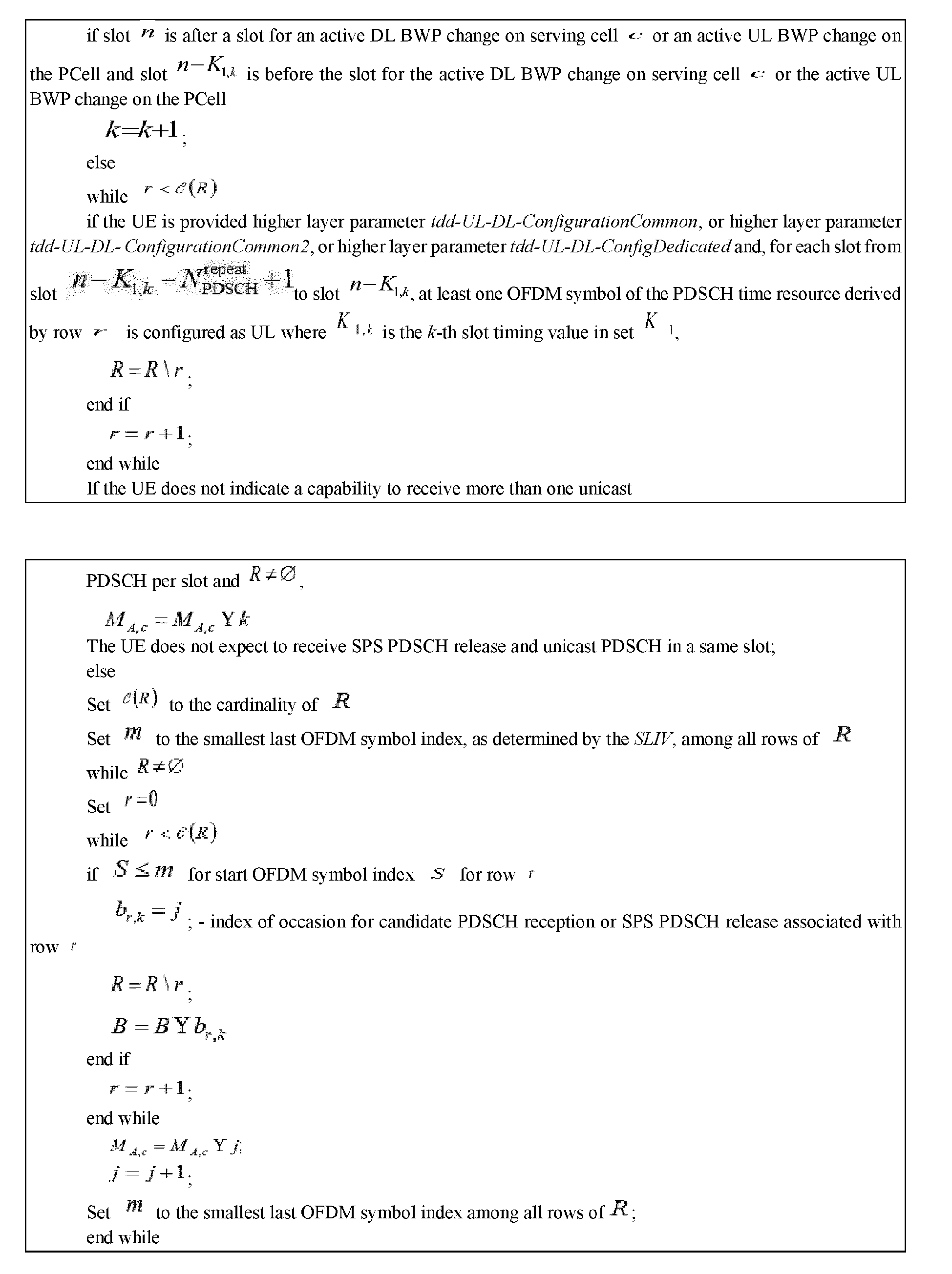

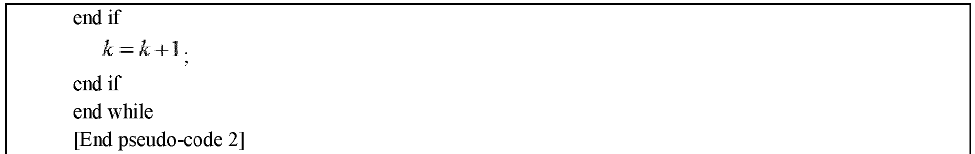

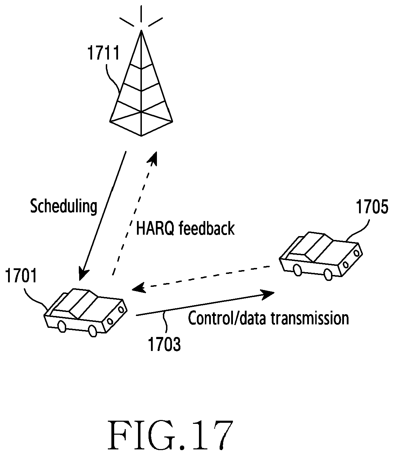

FIG. 17 illustrates an example of transmitting feedback information for sidelink data in a wireless communication system according to various embodiments of the present disclosure. Referring to FIG. 17, a terminal 1701 (e.g., the terminal 120) transmitting sidelink data may receive scheduling information 1715 from a base station 1711 (e.g., the base station 110), and transmit sidelink data to a terminal 1705 (e.g., the terminal 130) through the sidelink. The terminal 1701 transmitting the sidelink data may receive HARQ-ACK feedback information for the sidelink data from the terminal 1705 receiving the sidelink data. Next, the terminal 1701 may transmit the HARQ-ACK feedback to the base station 1711 to which the terminal 1701 is connected. FIG. 17 illustrates the example in which the HARQ-ACK feedback is transmitted on the sidelink, which is exemplary, and the embodiments of FIG. 17 may be applied even if other control information such as CSI is transmitted.

As shown in FIG. 17, the terminal 1701 transmitting the feedback information for the sidelink data to the base station 1711 must be accessed to the base station 1711. In other words, for the terminal 1701 to transmit the feedback information for the sidelink data to the base station 1711, the terminal 1701 must be in the RRC connected state. While the terminal 1701 is connected to the base station 1711 in the RRC connected state, the terminal 1701 may receive DL data and UL scheduling information from the base station 1711. The terminal 1701 receiving the DL data through the PDSCH may transmit HARQ-ACK feedback for the PDSCH to the base station 1711, and feed CSI for the downlink back to the base station 1711 according to configuration and indication by the base station 1711. In addition, the terminal 1701 receiving the UL scheduling information may transmit uplink data to the base station 1711 through the PUSCH according to the UL scheduling information. For example, the terminal 1701 may transmit uplink control information (UCI) including the HARQ-ACK feedback and the CSI, and a UL scheduling request (SR) to the base station 1711 through the PUCCH or the PUSCH.

The DL data transmission may be performed as follows. The base station transmits data to the terminal through the PDSCH. To transmit the PDSCH, the base station may transmit DCI including control information such as scheduling information to the terminal through the PDCCH, or pre-transmit the scheduling information through the higher layer signaling, and activate or deactivate persistent PDSCH transmission and/or semi-persistent PDSCH transmission through the PDCCH. To activate or deactivate the persistent or semi-persistent PDSCH transmission, the base station may indicate the activation or the deactivation to the terminal by setting values of specific bit fields of the DCI carried by the PDCCH to specific values.

The terminal may receive the PDSCH, and decode at least one TB carried in the PDSCH. The PDSCH may include one or two TBs, and each TB may be decoded using information such as MCS of scheduling information configured with the DCI or the higher layer signaling and resource assignment information. In addition, each TB may include one or more code blocks (CBs), and the CB may be a unit for performing channel coding and decoding. While decoding the CBs, the terminal may determine whether decoding each CB is successful or failed by checking CRC, and determine whether decoding the whole TB is successful or failed by checking CRC included in the TB. In various embodiments, if the CRC is not included in the CB, the terminal may determine whether decoding the CB is successful using the TB CRC.

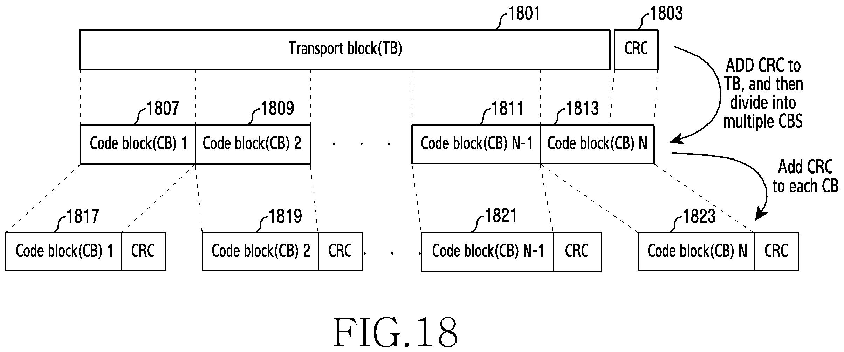

FIG. 18 illustrates an example of segmentation of CBs and CRC addition to CBs in a wireless communication system according to various embodiments of the present disclosure.

Referring to FIG. 18, CRC 1803 may be added to the last or head part of one TB 1801 to transmit in uplink or downlink. In various embodiments, the CRC 1803 may have 16 bits or 24 bits or a fixed number of bits, or may have a variable number of bits according to a channel state or quality, and may be used to determine whether channel coding is successfully performed. A block including a TB 1801 and the CRC 1803 may be divided into a plurality of CBs 1807, 1809, 1811, and 1813. A maximum size of each CB may be predefined, wherein the last CB 1813 may be smaller in size than other CB, or the length of the last CB 1813 may equal other CBs by adding 0, a random value or 1 to the last CB 1813. The CRCs 1817, 1819, 1821, and 1823 may be added to the divided CBs respectively. The CRCs 1817, 1819, 1821, 1823 may have 16 bits or 24 bits or a fixed number of bits, and may be used to determine whether the channel coding is successfully performed. According to an embodiment, the CRC 1803 added to the TB and the CRCs 1817, 1819, 1821, and 1823 added to the CBs may be omitted depending on the type of the channel code to be applied to the CB. According to another embodiment, if LDPC code is applied, the CRCs 1817, 1819, 1821, and 1823 may be added to the CB.

In various embodiments of the present disclosure, terms of CB group based retransmission, CBG based retransmission, partial retransmission, and CBG retransmission may be used interchangeably. In various embodiments, the number of CBGs configured from the base station to the terminal or the maximum number of the configured CBGs may be defined as N_{CBG,max}. Herein, N_{CBG,max} may be mixedly used with NCBG,max. In addition, the number of the CBs included in the scheduled TB may be defined as C. In this case, if the TB is scheduled, the number M of the CBGs may be determined as M=min(NCBG,max, C), and min(x,y) may indicate a smaller value of x and y. The C-ary CBs included in the TB may be grouped according to the following rules to configure M-ary CBGs:
- The first mod(C, M)-ary CBGs include ceil(C/M) or ^{┌}*C*/*M*^{┐}-ary CBs.
- The last M-mod(C,M)-ary CBGs each include floor(C/M) or ^{┌}*C*/*M*^{┐}-ary CBs.

Herein, ceil(C/M) or ^{┌}*C*/*M*^{┐} denotes a minimum integer which is not smaller than C/M, and floor(C/M) or ^{┌}*C*/*M*^{┐} denotes a maximum integer which is not greater than C/M. For example, if C/M is 4.3, ceil(C/M) is 5 and floor(C/M) is 4. According to the above rule, the CBs may be grouped sequentially from the previous CBG.

If the maximum number of the CBGs configured to the terminal is NCBG,max, the DCI transmitted to schedule the CBG based retransmission may include NCBG,max bits for CBG transmission information (CBGTI). In various embodiments, the CBGTI may indicate CBGs transmitted in current scheduling. For example, if the base station sets NCBG,max=4 to the terminal, one TB may include up to 4 CBGs, the DCI may include 4 bits for the CBGTI, and each bit may indicate whether each CBG may is transmitted or not. For example, if the CBGTI included in the DCI is 1111 and there are 4 CBGs, the CBGTI may indicate that all the CBGs are transmitted because each bit is 1. As another example, if the CBGTI included in the DCI is 1100 and there are 4 CBGs, the CBGTI may indicate that only first and second CBGs are transmitted.

The MAC protocol may allocate the TB received in the physical layer to a corresponding HARQ process. If the receiving device receives the TB and the scheduling information, if NDI of the corresponding HARQ process is toggled (or if the NDI is different from previously received NDI) or corresponding transmission is broadcast transmission, or if corresponding TB is transmitted first of all, the receiving device may regard the corresponding transmission as new transmission, and otherwise, may regard the corresponding transmission as retransmission.

The base station may inform the terminal of related configuration and indication information through the higher layer signaling and the physical layer control signal so that the terminal transmits HARQ-ACK information of the PDSCH to transmit in the downlink to the base station. In various embodiments, the HARQ-ACK information of the PDSCH may include at least one of TB based HARQ-ACK information for the TBs included in the PDSCH, or CBG based HARQ-ACK information if the CBG based retransmission and the feedback are configured. In various embodiments, the higher layer signaling may include at least one of MAC CE configuration and RRC configuration. The configuration information for the HARQ-ACK may include one or more of the following information:
- HARQ process IDs for transmitting the HARQ-ACK information
- The number of the HARQ processes for transmitting the HARQ-ACK information
- A time period for transmitting the HARQ-ACK information
- A time offset for transmitting the HARQ-ACK information
- PUCCH format and frequency-time resources for transmitting the HARQ-ACK information
- Information of whether the HARQ-ACK information is based on the TB unit or the CBG unit
- Information of the maximum number of CBGs per TB or the number of CBGs or the number of HARQ-ACK bits per TB if the HARQ-ACK information is based on the CBG unit

In various embodiments, the above-described configuration information for the HARQ-ACK may also be applied to the sidelink data transmission. Referring to FIG. 17, the terminal 1701 may inform the terminal 1705 of the related configuration and indication information through the higher layer signaling and the physical layer control signal so that the terminal 1705 transmits the HARQ-ACK information for the PSSCH to transmit through the sidelink to the terminal 1701. In various embodiments, the HARQ-ACK information for the PSSCH may include at least one of the TB based HARQ-ACK information of the TBs included in the PSSCH, or the CBG based HARQ-ACK information if the CBG based retransmission and the feedback are configured in the sidelink. In various embodiments, the higher layer signaling in the sidelink may include at least one of MAC CE configuration and PC5-RRC configuration. The related configuration information of the sidelink HARQ-ACK may include one or more of the following information:
- HARQ process IDs for transmitting sidelink HARQ-ACK information
- The number of the HARQ processes for transmitting the sidelink HARQ-ACK information
- A time period for transmitting the sidelink HARQ-ACK information
- A time offset for transmitting the sidelink HARQ-ACK information
- PSFCH or PSCCH format and frequency-time resources for transmitting the sidelink HARQ-ACK information
- Information of whether the HARQ-ACK information is based on the TB unit or the CBG unit
- Information of the maximum number of CBGs per TB or the number of CBGs or the number of HARQ-ACK bits per TB if the HARQ-ACK information is based on the CBG unit

In various embodiments, the terminal may simultaneously transmit the feedback for the sidelink data transmission to the base station as shown in FIGS. 15, 16 and 17, together with the uplink control information transmission. In other words, the terminal may simultaneously transmit the UCI and the sidelink feedback. In various embodiments, the simultaneous transmission may include at least one of transmission in the same symbol, or partial or full overlapping of the transmission timings. To transmit the sidelink feedback information together with the UCI to the base station, one or more of the following methods may be applied.

In FIG. 17, the terminal 1701 accessing the base station 1711 may transmit the sidelink data to the terminal 1705, and transmit the HARQ-ACK feedback information for the sidelink data transmitted from the terminal 1705 to the base station 1711. At this time, the terminal 1701 may transmit the sidelink feedback information together with the UCI to transmit to the base station 1711. In various embodiments, the terminal 1701 may transmit the UCI and the sidelink feedback information through the PUCCH or the PUSCH. The physical channel (e.g., the PUCCH or the PUSCH) transmitting the UCI and the sidelink feedback information may be determined based on the configuration or scheduling information from the base station 1711. The control information for scheduling the sidelink transmission from the base station 1711 may include information related to the PUCCH resource for transmitting the sidelink feedback and/or information related to timing for transmitting the sidelink feedback. The feedback information to be transmitted by the terminal 1701 to the base station 1711 may differ according to the UCI and the sidelink feedback information to be transmitted by the terminal 1701 to the base station 1711.

If the semi-static HARQ-ACK codebook is configured for the UCI transmission (i.e., if the number of the uplink HARQ-ACK feedback bits to transmit is fixed regardless of the scheduling of the base station 1711, or the type-1 HARQ-ACK codebook is configured in the NR system), and if the dynamic HARQ-ACK codebook is configured (i.e., if the number of the uplink HARQ-ACK feedback bits to transmit is determined based on the scheduling information of the base station 1711, or the type-2 HARQ-ACK codebook is configured in the NR system), the HARQ-ACK feedback for the sidelink data may be configured to be transmitted in the slot n for transmitting the UCI for each downlink serving cell configured in the terminal 1701.

In various embodiments, the sidelink feedback information may be appended to a rear or front portion of the HARQ-ACK feedback information for the downlink data. The number of bits of the sidelink feedback information may be determined based on a combination of one or more of the number of CWs configured for the sidelink transmission (i.e., the number of TBs transmitted in one physical channel, for example, one PSSCH), the sidelink transmission timing configured or indicated by the base station, timing for transmitting the sidelink feedback, timing information of when to transmit the sidelink feedback to the base station, or the number of sidelink serving cells configured for the sidelink communication.

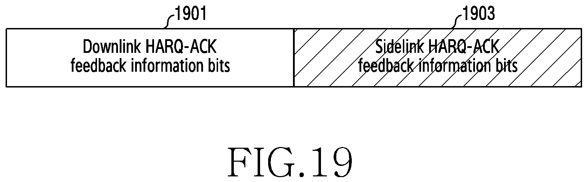

FIG. 19 illustrates an example of a configuration of feedback bits to be transmitted to a base station in uplink in a wireless communication system according to various embodiments of the present disclosure.

Referring to FIG. 19, bits 1901 of HARQ-ACK feedback information for downlink data, and bits 1903 of HARQ-ACK feedback information for sidelink data may be concatenated to configure feedback information bits to transmit in the uplink. In other words, the bits 1901 of the HARQ-ACK feedback information for the downlink data and the bits 1903 of the HARQ-ACK feedback information for the sidelink data may be consecutive. In various embodiments, the bits 1903 of the HARQ-ACK feedback information for the sidelink data are appended to a rear or front part of the bits 1901 of the HARQ-ACK feedback information for the downlink data, to be consecutive to the bits 1901 of the HARQ-ACK feedback information for the downlink data.

In various embodiments, a scheduling request for sidelink retransmission (or transmission) (hereafter, may be referred to as an SL-SR) may be applied instead of the bits 1903 of the HARQ-ACK feedback information for the sidelink data. In this case, the bits 1901 of the HARQ-ACK feedback information for the downlink data, and the SL-SR bits may be concatenated to configure the bits of the feedback information to transmit in the uplink. In other words, the bits 1901 of the HARQ-ACK feedback information for the downlink data and the SL-SR bits may be consecutive. In various embodiments, the SL-SR bits may be appended to the rear or front part of the bits 1901 of the HARQ-ACK feedback information for the downlink data, to be consecutive to the bits 1901 of the HARQ-ACK feedback information for the downlink data.

In various embodiments, if the terminal needs to transmit HARQ-ACK for downlink data in the uplink, the terminal may transmit only the HARQ-ACK for the downlink data in the uplink without transmitting the sidelink feedback information. In other words, the terminal may not transmit the sidelink feedback information to the base station even if receiving the sidelink feedback information from other terminal. Similarly, if the terminal needs to transmit CSI or SR in the uplink, the terminal may transmit only the CSI or the SR in the uplink without transmitting the sidelink feedback information.

In various embodiments, if the terminal needs to transmit the sidelink feedback information in the uplink, the terminal may transmit only the sidelink feedback information to the base station without transmitting the HARQ-ACK for the downlink data. In other words, after the terminal transmitting the sidelink data receives the feedback information for the sidelink data and/or the sidelink feedback information including the SL-SCI from the terminal receiving the sidelink data, the terminal may transmit the sidelink feedback information to the base station but may not transmit the UCI.

As mentioned above, after the CRC is added to the UCI and the UCI is encoded based on channel code such as polar code, the UCI including the feedback information for the downlink data and/or the feedback information for the sidelink data may be transmitted to the base station using the PUCCH format or the PUSCH in the resource pre-configured from the base station or determined based on the scheduling information. Whether the PUCCH or the PUSCH is used may be determined based on the number of the bits of the UCI and/or the uplink scheduling information.

### Second embodiment

According to the second embodiment, examples in which the terminal transmits HARQ-ACK information for sidelink data transmission to the base station by considering a signal processing time of the terminal in the RRC connected state are described.

In FIG. 17, the terminal 1701 receiving the scheduling information for the sidelink transmission from the base station 1711 may receive the sidelink feedback from the terminal 1705 receiving the sidelink transmission, and transmit information related to the sidelink feedback to the base station 1711. The terminal 1701 receiving the sidelink feedback may require a processing time to transmit the sidelink feedback to the base station after receiving the sidelink feedback. In various embodiments, the processing time may include at least one of a time required for channel estimation for receiving the sidelink feedback, a time required for a process such as decoding the sidelink feedback, or a time required for encoding to prepare for the sidelink feedback transmission to the base station 1711. Hence, the base station 1711 needs to consider the processing time, if scheduling the sidelink transmission for the terminal 1701, and/or if indicating the timing for transmitting the sidelink feedback to the base station 1711. Thus, it is necessary to define a minimum processing time required for the terminal 1701 to transmit the sidelink feedback to the base station 1711 after receiving the sidelink feedback, and information of the processing time needs to be shared between the base station 1711 and the terminal 1701.

For example, the processing time may be defined as N-ary symbols or T_{msec}. N and T may be determined based on the SCS used for the sidelink transmission, the OFDM symbol length, the SCS used for the downlink and uplink transmission or the OFDM symbol length. As another example, N and T may be determined based on a combination of at least two of the SCS used for the sidelink transmission, the OFDM symbol length, the SCS used for the downlink and uplink transmission or the OFDM symbol length.

### Third embodiment

According to the third embodiment, examples of transmitting groupcast data in the sidelink and transmitting feedback such as HARQ-ACK for groupcast data or sidelink channel status report as shown in FIG. 9 and FIG. 10 are described.

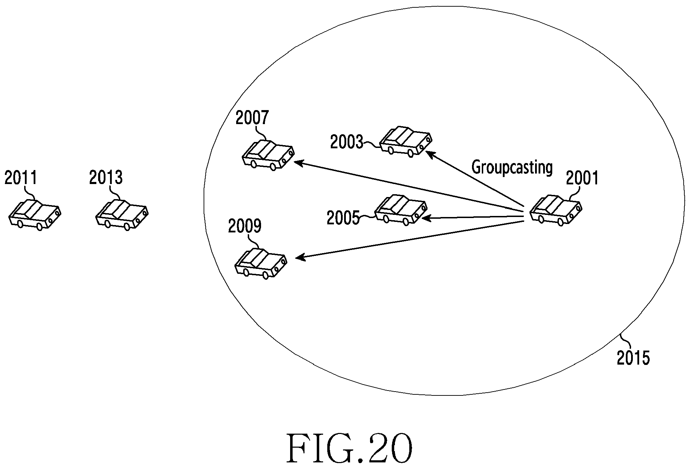

FIG. 20 illustrates an example of sidelink groupcast in a wireless communication system according to various embodiments of the present disclosure.

Referring to FIG. 20, terminals 2001, 2003, 2005, 2007, 2009, 2011, and 2013 may all belong to the same group. If the transmitting terminal 2001 transmits data in the groupcast, all of the terminals in the group may not need to receive the groupcast data transmitted by the transmitting terminal 2001. For example, the groupcast data transmitted by the transmitting terminal 2001 may be valid data only for terminals located within a specific distance 2015 from the transmitting terminal 2001, or in the same area among preset areas. Accordingly, the transmitting terminal 2001 may receive HARQ-ACK feedbacks for the sidelink groupcast data only from the terminals 2003, 2005, 2007, and 2009 within the specific distance 2015.

The terminals 2003, 2005, 2007, 2009, 2011, and 2013 in FIG. 20 may be configured to receive the sidelink groupcast data from the terminal 2001. To transmit the sidelink groupcast data, the terminals 2003, 2005, 2007, 2009, 2011, and 2013 may receive control information. For example, the control information may be obtained by receiving PSCCH and/or SCI. As another example, the control information may be obtained by receiving at least one SCI. The terminals 2003, 2005, 2007, 2009, 2011, and 2013 may decode the control information, and thus obtain target distance or location information for the sidelink groupcast data. In various embodiments, the information obtainable by decoding the control information may be referred to as 'indication information'. The indication information may include at least one of the following contents:
- Location information of the terminal (e.g., the terminal 2001) which transmits the control information
- Location ID information of a position at which the terminal transmitting the control information is located (e.g., an ID and/or an index value of a region of the position where the terminal is located)
- Location information of the position at which the terminal for transmitting the feedback information should be located among the terminals receiving the control information
- Location ID information of the position at which the terminal for transmitting the feedback information should be located among the terminals receiving the control information (e.g., an ID and/or an index value of a region of the position where the terminal receiving the sidelink groupcast data should be located)

The terminal may acquire measurement information based on a decoding reference signal (DMRS) for decoding at least one of the control information or data scheduled by the control information. In various embodiments, the measurement information may be obtained by measuring at least one of the following physical channels or physical signals:
- PSCCH
- DMRS for PSCCH
- PSSCH
- DMRS for PSSCH
- A reference signal for positioning
- A signal for synchronization acquisition (e.g., SSB, PSS, SSS, and so on for sidelink)
- A signal carried from a global positioning system (GPS) or a global navigation satellite system (GNSS)
- A signal for positioning

In addition, in various embodiments, the measurement information may have the same meaning as the following terms, and may be replaced by the following terms:
- Received signal strength
- Information related to a channel status between the transmitting device and the receiving device
- Information related to a distance between the transmitting device and the receiving device
- Location of the receiving device

In FIG. 20, the terminals 2003, 2005, 2007, 2009, 2011, and 2013 may receive the control information and/or the PSCCH for the sidelink groupcast from the terminal 2001, and identify the above-described indication information and measurement information based on the received information. The terminals 2003, 2005, 2007, 2009, 2011, and 2013 may determine whether to transmit the HARQ-ACK feedback for the received PSSCH, based on the indication information and the measurement information. For example, if a parameter (e.g., GroupcastEnabled) indicating that the groupcast signal is transmitted from a resource pool received by the terminal is enabled or is set to an activated value (e.g., 1), the terminal may receive the PSCCH for the sidelink groupcast, identify indication information from the information of the PSCCH, identify measurement information from the received signal strength measured from the DMRS of the PSCCH and/or the DMRS of the PSSCH, or from the location information of the terminal obtained from the GPS signal, and compare the indication information and the measurement information. By comparing the indication information and the measurement information, the terminal may determine whether to transmit the HARQ-ACK feedback for the PDSSCH. In various embodiments, the terminal may determine whether to transmit the HARQ-ACK for the PSSCH if the SCI bit field indicates that the PSCCH is for the groupcast.

For example, in FIG. 20, even if the terminals 2003, 2005, 2007, 2009, 2011, and 2013 receive the control information and/or the PSCCH for the sidelink groupcast from the terminal 2001, the terminals 2011 and 2013 may determine not to perform the HARQ-ACK feedback according to the comparison result of the indication information and the measurement information, wherein the terminals 2011 and 2013 may not transmit the HARQ-ACK feedback for the sidelink groupcast data.

In various embodiments, the indication information may include the ID and/or the index value of the region to which the transmitting terminal transmitting the sidelink groupcast data belongs, and may be indicated by the SCI. The measurement information may include the ID and/or the index value of the region to which the receiving terminal belongs, determined by the receiving terminal receiving the sidelink groupcast data by measuring the location of the receiving terminal. If the indication information and the measurement information match, the receiving terminal may transmit the HARQ-ACK feedback to the transmitting terminal.

In various embodiments, the indication information may include x-axis and y-axis values of the region to which the transmitting terminal transmitting the sidelink groupcast data belongs, or (x, y) coordinate values indicating a combination of an index indicating east and west-an index indicating south and north, and the indication information may be indicated by the SCI. The measurement information may include x-axis and y-axis values of the region to which the receiving terminal belongs, determined by the receiving terminal receiving the sidelink groupcast data by measuring the location of the receiving terminal, or (a, b) coordinate values indicating a combination of the index indicating east and west-the index indicating south and north. The receiving terminal may determine whether to transmit the HARQ-ACK feedback, based on the indication information and the measurement information. For example, if an absolute value of a difference between x and a is smaller than N and an absolute value of a difference between y and b is smaller than M, the receiving terminal may transmit the HARQ-ACK feedback to the transmitting terminal. In other words, if |x-a|≤N and |y-b|≤M are satisfied, the receiving terminal may transmit the HARQ-ACK feedback to the transmitting terminal. As another example, if |x-a|<N and |y-b|<M are satisfied, the receiving terminal may transmit the HARQ-ACK feedback to the transmitting terminal. N and M may be the same value, or may be different values. In addition, N and M may be fixed values (e.g., 1). The fixed value is not limited to 1, and may be various values. In various embodiments, N and M may be set in the receiving terminal by the higher layer signaling from the base station and/or the transmitting terminal.

In various embodiments, the receiving terminal receiving the sidelink groupcast data may determine a time-frequency resource for transmitting the HARQ-ACK based on the measurement information. For example, resources configured in the receiving terminal may include a resource for the transmission of the PSFCH. The receiving terminal may determine a resource for transmitting the PSFCH including the HARQ-ACK feedback information based on the indication information and the measurement information. For example, if the ID and/or the index of the region in which the transmitting terminal transmitting the sidelink groupcast data is located, indicated by the indication information, and the ID and/or the index of the region in which the receiving terminal is located, indicated by the measurement information, match, the receiving terminal may transmit the PSFCH in PSFCH resource #1, and if they do not match, may transmit the PSFCH in PSFCH resource #2. The PSFCH resource #1 and the PSFCH resource #2 include the time-frequency resources, and may be preset in the transmitting terminal and the receiving terminal, may be configured by the higher layer signaling, or may be dynamically indicated by the DCI and/or the SCI.

### Embodiment 4

According to the fourth embodiment, descriptions are made on examples for determining a feedback transmit power if a sidelink transmits groupcast data and transmits feedback such as HARQ-ACK for the groupcast data or sidelink channel state information as shown in FIG. 9 and FIG. 10.

In FIG. 20, the terminals 2003, 2005, 2007, 2009, 2011, and 2013 may receive the control information or the PSCCH for the sidelink groupcast from the terminal 2001, and identify the indication information and the measurement information based on the received information. In various embodiments, the receiving terminals 2003, 2005, 2007, 2009, 2011, 2013 may determine the power to be used to transmit the sidelink feedback based on the indication information and/or the measurement information. For example, the receiving terminal receiving the sidelink data may measure the strength of a signal (i.e., a received signal) received by the receiving terminal, and determine the transmit power of the PSFCH based on the measured received signal strength.

### Embodiment 5

According to the fifth embodiment, descriptions are made on examples for determining a timing for carrying HARQ-ACK feedback of a sidelink to the base station according to scheduling of the base station.

In various embodiments, in the sidelink communication, the transmitting terminal may transmit data for unicast or groupcast to the receiving terminal, and the receiving terminal may transmit HARQ-ACK information for the received unicast or groupcast data to the transmitting terminal. The transmitting terminal in the mode 2 sidelink communication determines a resource for transmitting data without the scheduling of the base station, but the transmitting terminal in the mode 1 sidelink communication may receive scheduling information for scheduling the resource for the sidelink transmission from the base station, and perform the sidelink data transmission in the scheduled resource.

The scheduling information from the base station for the mode 1 sidelink communication may be obtained at the transmitting terminal by receiving DCI, and such DCI may include at least one of the following parameters:
- Carrier indicator: may be used to schedule the sidelink of other carrier if carrier aggregation (CA) is applied.
- The lowest index of subchannel allocation for initial transmission: may be used for frequency resource assignment for initial transmission.
- Information to be included in the sidelink control information
- Frequency resource assignment information: may include resource allocation or resource reservation information for initial transmission, retransmission, and subsequent N-ary transmissions.
- Time gap information between initial transmission and retransmission
- Information related to a sidelink slot structure: may include information related to which slot and which symbols may be used for the sidelink.
- HARQ-ACK/CSI feedback timing information: may include timing information for transmitting the HARQ-ACK or CSI feedback of the sidelink to the base station.
- Recipient ID: ID information of the receiving terminals - Quality of service (QoS) information (e.g., priority): information of a priority of data to transmit
- Downlink assignment index (DAI) or sidelink assignment index (SAI) for the sidelink.
- PUCCH resource indicator: may indicate the resource of the PUCCH for transmitting the HARQ-ACK feedback.

In various embodiments, if the transmitting terminal receives the HARQ-ACK feedback information for the sidelink data transmission from the receiving terminal in the sidelink, or receives sidelink CSI feedback information which is sidelink channel information, the HARQ-ACK/CSI feedback timing information may indicate timing information for carrying the feedback information to the base station. To carry the feedback information to the base station, one or more of the following methods may be applied:
1. A method for indicating the timing for transmitting the HARQ-ACK feedback information and/or the sidelink CSI feedback information for the sidelink data transmission to the base station through the PUCCH or the PUSCH of the uplink in the bitfield of the HARQ-ACK/CSI feedback timing information of DCI. This method may indicate an offset (or a time difference) from a slot carrying the scheduling DCI to a slot transmitting the PUCCH or the PUSCH including the feedback information. In various embodiments, the slot carrying the DCI and the slot carrying the PUCCH or the PUSCH may include a sub-slot smaller than the slot in length, and the offset may include an index difference for the subslots. Alternatively, the base station may indicate an accurate offset value to the transmitting terminal, by transmitting a set of possible values among the offset values to the sidelink data transmitting terminal through the higher layer signaling, and indicating one value among the set carried through the higher layer signal through the DCI. In various embodiments, the set of the possible values among the offset values carried by the base station through the higher layer signaling may include different offset values according to the SCS (or numerology).
2. A method for the transmitting terminal to transmit the HARQ-ACK or the CSI feedback of the sidelink to the base station at a timing prearranged by the base station and the transmitting terminal.

In various embodiments, the SAI may enable the transmitting terminal to count the amount or the number of the sidelink scheduling received from the base station. The SAI may include at least one of a counter SAI and a total SAI. In various embodiments, in transmission of data for which the feedback needs to be transmitted to the base station at the same time in the sidelink data transmission, the base station may indicate the scheduling order of the data to the transmitting terminal, using the SAI included in each sidelink scheduling DCI. In various embodiments, the total SAI value may be applied or may not be used. That is, the SAI may indicate which bit of the total HARQ-ACK feedbacks to be transmitted on the PUCCH or PUSCH at the same time the HARQ-ACK bit for the data transmission for the sidelink indicated by the currently scheduled DCI should be mapped to. Alternatively, the SAI may indicate which bit of the total HARQ-ACK feedbacks to be transmitted on the PUCCH or PUSCH at the same time the HARQ-ACK bit for the data transmission for the sidelink indicated by the currently scheduled DCI should be mapped to. Alternatively, the SAI may indicate how many bits of the HARQ-ACK feedback should be transmitted on the PUCCH or PUSCH of a specific timing. For example, if the base station transmits the scheduling of the sidelink data transmission transmitting the sidelink HARQ-ACK feedback using the PUCCH or PUSCH of slot 2n to each transmitting terminal in slot n+1, slot n+2, slot n+3, and slot n+4, the SAI values included in the scheduling DCI may indicate 0, 1, 2, and 3 respectively. Thus, even if the terminal does not receive the DCI in the slot n+2 and the slot n+3, it may transmit 4-bit HARQ-ACK to the base station in the slot 2n based on this SAI, and the base station may successfully receive the 4-bits HARQ-ACK feedback information. If the SAI is absent, the terminal, which does not receive two DCIs, transmits only 2-bit HARQ-ACK feedback, but the base station, which receives the HARQ-ACK feedback by assuming that the HARQ-ACK feedback is 4 bits, may not correctly decode the HARQ-ACK feedback.

In various embodiments, there may be a specific time required for the signal processing until the transmitting terminal receives the DCI including the HARQ-ACK/CSI feedback timing information from the base station, and transmits the PUCCH or the PUSCH including the HARQ-ACK or the CSI feedback information from the DCI reception. A minimum time required for the signal processing may be calculated by considering one or more of the following times:
- A time required for the transmitting terminal to receive and process the PDCCH
- A time required for the transmitting terminal to sense the sidelink channel
- A time required for the transmitting terminal to transmit the sidelink data PSSCH
- A time required for the receiving terminal to receive the PSSCH and transmit the feedback for the PSSCH
- The position of the slot in which the resource of the PSFCH for transmitting the feedback is configured according to resource pool setting
- A time required for the transmitting terminal to receive the PSFCH and to transmit the PSFCH to the base station using the PUCCH or the PUSCH

The base station is required to transmit the HARQ-ACK/CSI feedback timing information including a value greater than or equal to the calculated minimum time to the transmitting terminal, by considering the minimum time required for the signal processing of the transmitting terminal. If the HARQ-ACK/CSI feedback timing information includes a value smaller than the minimum time required for the signal processing of the transmitting terminal, the transmitting terminal may not transmit valid HARQ-ACK/CSI feedback information to the base station.

In various embodiments, the scheduling from the base station may include at least one of scheduling for single sidelink transmission, persistent transmission or SPS scheduling, or configured grant sidelink scheduling. The scheduling method may be distinguished by the indicator included in the DCI, the RNTI scrambled in the CRC added to the DCI or the ID value. A bit (e.g., 0 bit) may be added to the DCI, so that the size of the DCI is the same as the size of other DCI format such as DCI for downlink scheduling or uplink scheduling.

The transmitting terminal may receive the DCI for the sidelink scheduling from the base station, transmit the PSCCH including the sidelink scheduling information to the receiving terminal, and transmit the PSSCH which is data scheduled by the PSCCH to the receiving terminal. The sidelink scheduling information may be SCI, and the SCI may include at least one of the following parameters:
- HARQ process number: an HARQ process ID for HARQ-related operation of the transmitted data
- NDI: information indicating whether the currently transmitted data is new data
- Redundancy version: parity bit information used for mapping data to which the channel coding is applied.
- Layer-1 source ID: ID information of the physical layer of the transmitting terminal
- Layer-1 destination ID: ID information of the physical layer of the receiving terminal
- Frequency-domain resource assignment for scheduling PSSCH: frequency domain resource configuration information of data to be transmitted
- MCS: modulation order and coding rate information
- QoS indication: including at least one of priority, target latency/delay, target distance, and target error rate wnd.
- Antenna port(s): antenna port information for data transmission
- DMRS sequence initialization: including information such as an ID value for DMRS sequence initialization.
- PTRS-DMRS association: including PTRS mapping information.
- CBGTI: may be used as an indicator for CBG-based retransmission.
- Resource reservation: information for resource reservation
- Time gap between initial transmission and retransmission: time gap information between initial transmission and retransmission
- Retransmission index: an indicator for distinguishing retransmission
- Transmission format/cast type indicator: an indicator for identifying transmission format or unicast/groupcast/broadcast
- Zone ID: the location information of the transmitting terminal
- NACK distance: a reference indicator used to determine whether the receiving terminal should transmit the HARQ-ACK/NACK
- HARQ feedback indication: including whether the HARQ feedback is required to be transmitted or is being transmitted.
- Time-domain resource assignment for scheduling PSSCH: time-domain resource information of the transmitted sidelink data
- Second SCI indication: an indicator including mapping information of second SCI in 2-stage control information
- DMRS pattern: a DMRS pattern (e.g., the position of the symbol to which the DMRS is mapped) information

In various embodiments, the above-described control parameters may be transmitted to the receiving terminal through one SCI, or may be transmitted through two or more SCIs. Transmitting the control parameters through two SCIs may be referred to as a two-stage SCI transmission method.

### Sixth embodiment

According to the sixth embodiment, descriptions are made on a method for determining a frequency resource carrying HARQ-ACK feedback of a sidelink to the base station according to scheduling of the base station.

In various embodiments, in sidelink communication, the transmitting terminal may transmit data for unicast or groupcast to the receiving terminal, and the receiving terminal may transmit HARQ-ACK information for the received unicast or groupcast data to the transmitting terminal. The transmitting terminal determines a resource for transmitting the data without scheduling of the base station in the mode 2 sidelink communication, but the transmitting terminal receives scheduling information for scheduling the resource for the sidelink transmission from the base station in the mode 1 sidelink communication and perform the sidelink data transmission in the scheduled resource.

The scheduling information from the base station for the sidelink communication through the Mode 1 may be obtained by receiving DCI, and the DCI may include the following information.
- Carrier indicator: may be used to schedule a sidelink of other carrier if the CA is applied.
- Lowest index of subchannel allocation for initial transmission: may be used for frequency resource allocation of initial transmission.
- Information to be included in the sidelink control information
- Frequency resource allocation information: may include resource allocation or resource reservation information for initial transmission, retransmission, and subsequent N-ary transmissions.
- Time gap information between initial transmission and retransmission
- Sidelink slot structure information: may include information of which slot and which symbols may be used for the sidelink.
- HARQ-ACK/CSI feedback timing information: may include timing information for transmitting HARQ-ACK or CSI feedback of the sidelink to the base station.
- Recipient ID: ID information of receiving terminals
- QoS information (e.g., priority): information of priority of data to transmit
- DAI or SAI for sidelink.
- PUCCH resource indicator: may indicate the PUCCH resource for transmitting the HARQ-ACK feedback.

In various embodiments, if the transmitting terminal receives the HARQ-ACK feedback information for the sidelink data transmission from the receiving terminal in the sidelink, or receives sidelink CSI feedback information which is sidelink channel information, the PUCCH resource indicator may indicate information of the frequency resource for transmitting the received feedback information to the base station through the PUCCH. The PUCCH resource indicator may indicate one PUCCH of one or more PUCCH resources configured through the higher layer signaling (the configured PUCCH resource may include a PUCCH resource for carrying the sidelink HARQ-ACK feedback information to the base station).

If it is indicated to transmit a plurality of PUCCHs at the same timing or in one slot, the base station and/or the transmitting terminal may select (determine) the PUCCH resource for transmitting the actual feedback information based on the following priority. In various embodiments, even if a specific PUCCH resource is determined, the feedback information transmitted in the corresponding PUCCH resource may include a bundle of feedback information indicated to be transmitted in various PUCCH resources.
1. PUCCH resource indicated by the last DCI carried
2. PUCCH resource indicated by DCI carried at the lowest serving cell index
3. DCI carried for Uu link scheduling
4. DCI carried for SL link scheduling

For example, if the DCI indicates to transmit HARQ-ACK feedback for a first PSSCH related to sidelink transmission scheduled in the slot n through a first PUCCH resource in the slot 2n, and the DCI indicates to transmit HARQ-ACK feedback for a second PSSCH related to sidelink transmission scheduled in the slot n+1 through a second PUCCH resource in the slot 2n, the transmitting terminal may multiplex the HARQ-ACK feedback for the first PSSCH and the HARQ-ACK feedback for the second PSSCH using the second PUCCH resource in the slot 2n, and transmit the multiplexed HARQ-ACK feedback information. In various embodiments, multiplexing a plurality of information elements may mean concatenating the plurality of the information elements, and channel-coding and transmitting the concatenated information elements.

As another example, if the DCI indicates to transmit HARQ-ACK feedback for a first PDSCH related to downlink transmission scheduled in the slot n through a first PUCCH resource in the slot 2n, and the DCI indicates to transmit the HARQ-ACK feedback for the first PSSCH related to sidelink transmission scheduled in the slot n+1 through the second PUCCH resource in the slot 2n, the transmitting terminal may multiplex the HARQ-ACK feedback for the first PDSCH and the HARQ-ACK feedback for the first PSSCH using the second PUCCH resource in the slot 2n, and transmit the multiplexed HARQ-ACK feedback information. In other words, the transmitting terminal may transmit the HARQ-ACK feedback in the second PUCCH resource configured to transmit the sidelink feedback to the base station.

As another example, if the DCI indicates to transmit the HARQ-ACK feedback for the first PDSCH related to the downlink transmission scheduled in the slot n through the first PUCCH resource in the slot 2n, and the DCI indicates to transmit the HARQ-ACK feedback for the first PSSCH related to the sidelink transmission scheduled in the slot n through the second PUCCH resource in the slot 2n, the DCI schedules to transmit the HARQ-ACK feedback for the first PDSCH and the HARQ-ACK feedback for the first PSSCH at the same time but the transmitting terminal may multiplex the HARQ-ACK feedback for the first PDSC and the HARQ-ACK feedback for the first PSSCH using the first PUCCH resource in the slot 2n, and transmit the multiplexed HARQ-ACK feedback information, because the Uu link scheduling DCI precedes the SL link scheduling DCI. In other words, the transmitting terminal may transmit the HARQ-ACK feedback in the first PUCCH resource configured to transmit the feedback for the downlink data transmission to the base station.

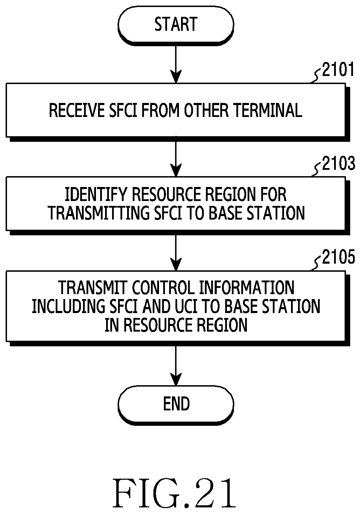

FIG. 21 illustrates a flowchart of a terminal for sidelink communication in a wireless communication system according to various embodiments of the present disclosure. FIG. 21 illustrates an operating method of the terminal 120 or the terminal 1701.

Referring to FIG. 21, in step 2101, the terminal may receive SFCI from other terminal. For example, the terminal may transmit sidelink data to the other terminal, and receive the SFCI including feedback information for the sidelink data.

In step 2103, the terminal may identify a resource region for transmitting the SFCI to the base station. For example, the terminal may identify a PUCCH resource or a PUSCH resource for transmitting the SFCI to the base station, and a slot timing for transmitting the SFCI, based on control information received from the base station.

In step 2105, the terminal may transmit the control information including the SFCI and UCI to the base station in the resource region. In other words, the terminal may transmit the SFCI and the UCI together to the base station in the identified resource region.

In various embodiments, the SFCI may include at least one of an SL-SR for requesting resource scheduling for transmission or retransmission of the sidelink, HARQ-ACK for the sidelink data, SL-CSI which is channel state information for the sidelink channel, or a SL-BSR indicating a data amount to be transmitted by the other terminal.

In various embodiments, the UCI may include at least one of a SR for requesting resource scheduling for transmission or retransmission of the terminal, HARQ-ACK for downlink data, or channel state information of a radio access channel.

In various embodiments, bits of the HARQ-ACK for the downlink data and bits of the SL-SR may be consecutive in the control information. In other words, the bits of the HARQ-ACK for the downlink data and the bits of the SL-SR may configure consecutive bits. In this case, the bits of the SL-SR may be positioned before or after the bits of the HARQ-ACK for the downlink data.

In various embodiments, the bits of the HARQ-ACK for the downlink data and the bits of the SL-BSR may be consecutive in the control information. In other words, the bits of the HARQ-ACK for the downlink data and the bits of the SL-BSR may configure consecutive bits. In this case, the bits of the SL-BSR may be positioned before or after the bits of the HARQ-ACK for the downlink data.

In various embodiments, the HARQ-ACK bits for the downlink data and the HARQ-ACK bits for the sidelink data may be consecutive in the control information. In other words, the HARQ-ACK bits for the downlink data and the HARQ-ACK bits for the sidelink data may configure consecutive bits. In this case, the HARQ-ACK bits for the sidelink data may be positioned before or after the HARQ-ACK bits for the downlink data.

In various embodiments, the SFCI may be transmitted from the other terminal to the terminal through the PSFCH.

In various embodiments, a transmit power of the PSFCH may be determined based on a signal strength received by the other terminal. The signal may include at least one of PSCCH, DMRS for PSCCH, PSSCH, DMRS for PSSCH, a reference signal for positioning or a signal for positioning, a signal for obtaining synchronization in the sidelink, and a signal carried from a GPS or a GNSS.

In various embodiments, the resource region may be included in the PUCCH resource region or the PUSCH resource region.

In various embodiments, at least one of symbols transmitting the SFCI in the resource region and at least one of symbols transmitting the UCI in the resource region are the same, and a frequency resource transmitting the SFCI in the resource region and a frequency resource transmitting the UCI in the resource region may be different from each other. In other words, the SFCI may be frequency multiplexed in the PUSCH resource or the PUCCH resource.

In various embodiments, at least part of the frequency resource transmitting the SFCI in the resource region, and the frequency resource transmitting the UCI in the resource region are overlapped, the symbols transmitting the SFCI in the resource region and the symbols transmitting the UCI in the resource region may be different from each other. In other words, the SFCI may be time multiplexed in the PUSCH resource or the PUCCH resource.

In various embodiments, the terminal may receive first information indicating the PUCCH resource or the PUSCH resource for transmitting the SFCI to the base station, and a slot timing, determine a resource region corresponding to the PUSCH resource or the PUCCH resource in the slot indicated by the slot timing, based on the first information, and transmit control information including the SFCI and the UCI to the base station through the PUCCH resource or the PUSCH resource in the slot. The first information may be DCI.

In various embodiments, the terminal may receive second information indicating the PUCCH resource or the PUSCH resource for transmitting the UCI to the base station, and a slot timing, determine a resource region corresponding to the PUSCH resource or the PUCCH resource in the slot indicated by the slot timing, based on the second information, and transmit control information including the SFCI and the UCI to the base station through the PUCCH resource or the PUSCH resource in the slot. The second information may be DCI.

In various embodiments, the first information and the second information may be the same or different.

In various embodiments, the resource region may include the slot, and the terminal may identify a first slot timing for transmitting the SFCI, identify a second slot timing for transmitting the UCI, and transmit the SFCI and the UCI in the slot, in response to identifying that the first slot timing and the second slot timing indicate the slot.

In various embodiments, the timing for transmitting the SFCI to the base station may be determined based on a processing time required to transmit the SFCI to the base station after the terminal receives the SFCI from other terminal.

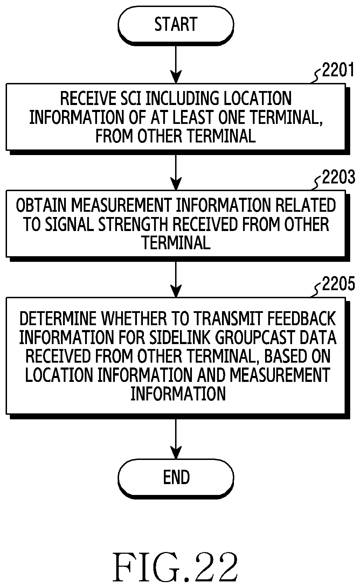

FIG. 22 illustrates a flowchart of a terminal for sidelink groupcast in a wireless communication system according to various embodiments of the present disclosure. FIG. 22 illustrates an operating method of the terminal 120 or the terminal 1701.

Referring to FIG. 22, in step 2201, the terminal may receive SCI including location information of at least one terminal, from other terminal. The location information of at least one terminal may include location information of the terminal and the other terminal.

In step 2203, the terminal may obtain measurement information related to a signal strength received from the other terminal. For example, the terminal may measure the signal strength received from the other terminal, and obtain the measurement information based on the measured signal strength.

In step 2205, the terminal may determine whether to transmit feedback information for sidelink groupcast data received from the other terminal, based on the location information and the measurement information. For example, the terminal may determine whether the sidelink groupcast data is valid data for the terminal based on the measurement information and the location information, and if it is the valid data, the terminal may determine to transmit the feedback information. By contrast, if it is not the valid data, the terminal may determine not to transmit the feedback information.

In various embodiments, the location information may include at least one of position information of the other terminal, an ID of an area in which the other terminal is located, information of a position at which the terminal is required to transmit the feedback information for the sidelink groupcast data, or an ID of an area in which the terminal is required to transmit the feedback information for the sidelink groupcast data.

In various embodiments, the measurement information may include at least one of the signal strength received from the other terminal, channel state information of a channel between the other terminal and the terminal, distance information between the other terminal and the terminal, or location information of the terminal.

In various embodiments, the terminal may identify the ID of the area where the other terminal is located, determine the ID of the area where the terminal is located, based on the location information of the terminal, determine to transmit the feedback information for the sidelink groupcast data received from the other terminal, based on determining that the ID of the area where the other terminal is located and the ID of the area where the terminal is located match, and transmit the feedback information to the other terminal.

In various embodiments, the terminal may identify a coordinate value of the area where the other terminal is located, identify a coordinate value of the area where the terminal is located, based on the location information of the terminal, determine to transmit the feedback information for the sidelink groupcast data received from the other terminal, based on determining that a difference of the coordinate value of the area where the other terminal is located and the coordinate value of the area where the terminal is located is less than a threshold, and transmit the feedback information to the other terminal. The threshold may be set in the terminal by the higher layer signaling from the base station or the other terminal.

In various embodiments, the terminal may identify the ID of the area where the other terminal is located, determine the ID of the area where the terminal is located, based on the location information of the terminal, and transmit the feedback information to the other terminal through a first PSFCH, if the ID of the area where the other terminal is located and the ID of the area where the terminal is located match. If the ID of the area where the other terminal is located and the ID of the area where the terminal is located do not match, the terminal may transmit the feedback information to the other terminal through a second PSFCH. The first PSFCH and the second PSFCH may be different from each other.

In various embodiments, the signal received from the other terminal may include at least one of PSCCH, DMRS for PSCCH, PSSCH, DMRS for PSSCH, a reference signal for positioning or a signal for positioning, a signal for obtaining synchronization in the sidelink, and a signal carried from a GPS or a GNSS.

In various embodiments, the feedback information may include at least one of an SL-SR for requesting resource scheduling for transmission or retransmission in the sidelink, HARQ-ACK for the sidelink groupcast data, SL-CSI which is channel state information for the sidelink channel, or a SL-BSR indicating a data amount to be transmitted by the terminal.

The methods according to the embodiments described in the claims or the specification of the disclosure may be implemented in software, hardware, or a combination of hardware and software.

As for the software, a computer-readable storage medium storing one or more programs (software modules) may be provided. One or more programs stored in the computer-readable storage medium may be configured for execution by one or more processors of an electronic device. One or more programs may include instructions for controlling the electronic device to execute the methods according to the embodiments described in the claims or the specification of the disclosure.

Such a program (software module, software) may be stored to a random access memory, a non-volatile memory including a flash memory, a read only memory (ROM), an electrically erasable programmable ROM (EEPROM), a magnetic disc storage device, a compact disc (CD)-ROM, digital versatile discs (DVDs) or other optical storage devices, and a magnetic cassette. Alternatively, it may be stored to a memory combining part or all of those recording media. In addition, a plurality of memories may be included.

Also, the program may be stored in an attachable storage device accessible via a communication network such as Internet, Intranet, local area network (LAN), wide LAN (WLAN), or storage area network (SAN), or a communication network by combining these networks. Such a storage device may access a device which executes an embodiment of the present disclosure through an external port. In addition, a separate storage device on the communication network may access the device which executes an embodiment of the present disclosure.

In the specific embodiments of the present disclosure, the elements included in the disclosure are expressed in a singular or plural form. However, the singular or plural expression is appropriately selected according to a proposed situation for the convenience of explanation, the disclosure is not limited to a single element or a plurality of elements, the elements expressed in the plural form may be configured as a single element, and the elements expressed in the singular form may be configured as a plurality of elements.

Meanwhile, while the specific embodiment has been described in the explanations of the present disclosure, it will be noted that various changes may be made therein without departing from the scope of the disclosure. Thus, the scope of the disclosure is not limited and defined by the described embodiment and is defined not only the scope of the claims as below but also their equivalents.

## Claims

1. A terminal in a wireless communication system, comprising:
a transceiver for receiving sidelink feedback control information (SFCI), from other terminal; and
at least one processor for identifying a resource region for transmitting the SFCI to a base station,
wherein the transceiver transmits control information comprising the SFCI and uplink control information (UCI) to the base station in the resource region.

2. The terminal of claim 1, wherein the SFCI comprises at least one of a sidelink scheduling request (SL-SR) for requesting scheduling of a resource for transmission or retransmission of a sidelink, hybrid automatic repeat request-acknowledgement (HARQ-ACK) for sidelink data. sidelink-channel state information (SL-CSI) which is channel state information for a sidelink channel, or a sidelink-buffer status report (SL-BSR) indicating an amount of data to be transmitted by the other terminal, and
the UCI comprises at least one of an SR for requesting resource scheduling for transmission or retransmission by the terminal, HARQ-ACK for downlink data, or CSI for a radio access channel.

3. The terminal of claim 1, wherein the SFCI is transmitted from the other terminal to the terminal through a physical sidelink feedback channel (PSFCH).

4. The terminal of claim 1, wherein the resource region is included in a resource region of a physical uplink control channel (PUCCH) or a resource region of a physical uplink control channel (PUSCH).

5. The terminal of claim 1, wherein at least one of symbols transmitting the SFCI in the resource region, and at least one of symbols transmitting the UCI in the resource region are the same, and
a frequency resource transmitting the SFCI in the resource region, and a frequency resource transmitting the UCI in the resource region are different from each other.

6. The terminal of claim 1, wherein at least part of a frequency resource transmitting the SFCI in the resource region, and a frequency resource transmitting the UCI in the resource region overlap, and
symbols transmitting the SFCI in the resource region, and symbols for transmitting the UCI in the resource region are different from each other.

7. The terminal of claim 1, wherein the transceiver receives first information indicating a PUCCH resource or a PUSCH resource for transmitting the SFCI to the base station, and a slot timing,
based on the first information, the at least one processor determines the resource region corresponding to the PUCCH resource or the PUSCH resource in a slot indicated by the slot timing, and
the transceiver transmits control information comprising the SFCI and UCI to the base station through the PUCCH resource or the PUSCH resource in the slot.

8. The terminal of claim 1, wherein the transceiver receives second information indicating a PUCCH resource or a PUSCH resource for transmitting the UCI to the base station, and a slot timing,
based on the second information, the at least one processor determines the resource region corresponding to the PUCCH resource or the PUSCH resource in a slot indicated by the slot timing, and
the transceiver transmits control information comprising the SFCI and UCI to the base station through the PUCCH resource or the PUSCH resource in the slot.

9. The terminal of claim 1, wherein the resource region includes a slot, and
the at least one processor identifies a first slot timing for transmitting the SFCI, identify a second slot timing for transmitting the UCI, and transmits the SFCI and the UCI in the slot, in response to identifying that the first slot timing and the second slot timing indicate the slot.

10. The terminal of claim 1, wherein the timing for transmitting the SFCI to the base station is determined based on a processing time required to transmit the SFCI to the base station after the terminal receives the SFCI from the other terminal.

11. A terminal in a wireless communication system, comprising:
a transceiver for receiving sidelink control information (SCI) comprising location information of at least one terminal, from other terminal; and
at least one processor for obtaining measurement information related to a signal strength received from the other terminal, and determining whether to transmit feedback information for sidelink groupcast data received from the other terminal, based on the location information and the measurement information.

12. The terminal of claim 11, wherein the signal comprises at least one of a physical sidelink control channel (PSCCH), a demodulation reference signal (DMRS) for the PSCCH, a physical sidelink shared channel (PSSCH), a DMRS for the PSSCH, a reference signal for positioning or a signal for positioning, a signal for obtaining synchronization in a sidelink, or a signal carried from a global positioning system (GPS) or a global navigation satellite system (GNSS).

13. The terminal of claim 11, wherein the feedback information comprises at least one of a sidelink scheduling request (SL-SR) for requesting resource scheduling for transmission or retransmission of a sidelink, hybrid automatic repeat request-acknowledgement (HARQ-ACK) for sidelink groupcast data, sidelink-channel state information (SL-CSI) which is channel state information for a sidelink channel, or a sidelink-buffer status report (SL-BSR) indicating an amount of data to be transmitted by the terminal.

14. An operating method of a terminal in a wireless communication system, comprising:
receiving sidelink feedback control information (SFCI) from other terminal;
identifying a resource region for transmitting the SFCI to a base station; and
transmitting control information comprising the SFCI and uplink control information (UCI) to the base station in the resource region.

15. An operating method of a terminal in a wireless communication system, comprising:
receiving sidelink control information (SCI) comprising location information for at least one terminal, from other terminal;
obtaining measurement information related to a signal strength received from the other terminal; and
determining whether to transmit feedback information for sidelink groupcast data received from the other terminal, based on the location information and the measurement information.
